# FASCICULE DE BREVET EUROPEEN

(11) **EP 3 397 671 B1**
(45) Date de publication et mention de la délivrance du brevet: **12.02.2020**
(21) Numéro de dépôt: 16809695.6
(22) Date de dépôt: 05.12.2016
(51) Int. Cl.: C08G 73/02, C08G 73/06, B01D 53/52, C10L 3/10, B01D 53/14

(54) **NOUVELLES POLYAMINES, LEUR PROCEDE DE SYNTHESE ET LEUR UTILISATION POUR L'ELIMINATION SELECTIVE DE L'H2S D'UN EFFLUENT GAZEUX COMPRENANT DU CO2**
NEUARTIGE POLYAMINE, SYNTHESEVERFAHREN DAFÜR UND VERWENDUNG DAVON ZUR SELEKTIVEN ELIMINIERUNG VON H2S AUS EINEM GASFÖRMIGEN ABSTROM MIT CO2
NOVEL POLYAMINES, SYNTHESIS PROCESS THEREOF AND USE OF SAME FOR THE SELECTIVE ELIMINATION OF H2S FROM A GASEOUS EFFLUENT COMPRISING CO2

(30) Priorité: 11.12.2015 FR 1562247
(43) Date de publication de la demande: 07.11.2018
(73) Titulaire: IFP Energies nouvelles, 92500 Rueil-Malmaison (FR)
(72) Inventeur: DELFORT, Bruno, 75005 Paris (FR); NICOLA, Antoine, 69005 Lyon (FR); HUARD, Thierry, 69360 Saint Symphorien d'Ozon (FR); WENDER, Aurélie, 92500 Rueil-Malmaison (FR); LEFEBVRE, Catherine, 78230 Le Pecq (FR); LALOUE, Nicolas, 69007 Lyon (FR); GAILLARD, Karine, 69007 Lyon (FR)
(74) Mandataire: IFP Energies nouvelles
(86) Numéro de dépôt international: PCT/EP2016/079779
(87) Numéro de publication internationale: WO 2017/097716

(56) Documents cités:
- WO-A1-2014/001669
- US-A- 4 013 787

## Description

### Domaine de l'invention

La présente invention concerne de nouveaux composés azotés appartenant à la famille des polyamines, issus de la réaction entre un diglycidyléther de polyol et de la pipérazine. L'invention concerne également le procédé de synthèse desdits composés, ainsi que leur utilisation dans un procédé de désacidification d'un effluent gazeux, tel que le gaz d'origine industrielle ou le gaz naturel.

### Contexte général

On utilise couramment des procédés d'absorption mettant en œuvre une solution aqueuse d'amines pour retirer les composés acides, notamment le dioxyde de carbone (CO₂), l'hydrogène sulfuré (H₂S), l'oxysulfure de carbone (COS), le disulfure de carbone (CS₂), le dioxyde de soufre (SO₂) et les mercaptans (RSH), présents dans un gaz. Le gaz est désacidifié par mise en contact avec la solution absorbante dans une colonne d'absorption ("absorbeur"), puis la solution absorbante est régénérée thermiquement dans une colonne de régénération ("régénérateur"). Un gaz appauvri en composés acides est alors produit dans l'absorbeur, et un gaz riche en composés acides sort du régénérateur. Le document US 6,852,144 décrit par exemple une méthode d'élimination des composés acides des hydrocarbures. La méthode utilise une solution absorbante eau-N-méthyldiéthanolamine ou eau-triéthanolamine contenant une forte proportion d'au moins un composé appartenant au groupe suivant : pipérazine, méthylpipérazine et morpholine.

Une limitation des solutions absorbantes couramment utilisées dans des applications de désacidification est une sélectivité insuffisante d'absorption de l'H₂S par rapport au CO₂. En effet, dans certains cas de désacidification du gaz naturel, on recherche une élimination sélective de l'H₂S en limitant au maximum l'absorption du CO₂. Cette contrainte est particulièrement importante pour des gaz à traiter contenant déjà une teneur en CO₂ inférieure ou égale à la spécification désirée. On recherche alors une capacité d'absorption de l'H₂S maximale avec une sélectivité maximale d'absorption de H₂S vis-à-vis du CO₂. Cette sélectivité permet de récupérer un gaz acide en sortie de régénérateur ayant une concentration la plus élevée possible en H₂S, ce qui limite la taille des unités de la chaîne soufre en aval du traitement et garantit un meilleur fonctionnement. Dans certains cas, une unité d'enrichissement en H₂S est nécessaire pour concentrer en H₂S le gaz acide. Dans ce cas, on recherche également la solution absorbante la plus sélective possible. Les unités de traitement de gaz de queue requièrent également une élimination sélective de l'H₂S, qui est renvoyé en amont de la chaîne soufre.

Il est bien connu de l'homme du métier que les amines tertiaires ou les amines secondaires avec un encombrement stérique sévère ont une cinétique de captage du CO₂ plus lente que des amines primaires ou les amines secondaires peu encombrées. En revanche, les amines tertiaires ou les amines secondaires avec un encombrement stérique sévère ont une cinétique de captage de l'H₂S instantanée, ce qui permet de réaliser une élimination sélective de l'H₂S basée sur des performances cinétiques distinctes.

En 1950, Frazier et Kohl (Ind. and Eng. Chem., 42, 2288) ont notamment montré que l'amine tertiaire qu'est la N-méthyldiéthanolamine (MDEA) présente un haut degré de sélectivité d'absorption de l'H₂S par rapport au CO₂, en raison des performances cinétiques distinctes de cette amine sur ces deux gaz. Cependant, il existe des cas où l'utilisation de la MDEA ne permet pas d'atteindre la capacité d'absorption d'H₂S désirée et présente une sélectivité insuffisante. Ainsi, l'utilisation de la MDEA pour traiter des gaz contenant des pressions partielles élevées en CO₂ et H₂S, comme c'est par exemple le cas pour certains gaz naturels, présente un intérêt limité. Il en va de même quand il s'agit de réduire les teneurs en H₂S à des faibles pressions partielles, par exemple dans le cadre de traitement de gaz de queue de raffinerie ou des gaz de synthèse.

Les brevets US 4,405,581, US 4,405,582 et US 4,405,583 divulguent l'utilisation de solutions absorbantes à base d'amines secondaires encombrées pour l'élimination sélective de l'H₂S en présence de CO₂. Le brevet US 4,405,811 divulgue l'utilisation d'aminoétheralcools tertiaires encombrés, et le brevet US 4,483,833 divulgue l'utilisation d'aminoalcool et d'aminoétheralcools hétérocycliques pour éliminer l'H₂S d'un mélange gazeux comprenant de l'H₂S et du CO₂. L'ensemble de ces brevets décrit des performances améliorées en terme de sélectivité et de capacité par rapport à la N-méthyldiéthanolamine. Ces amines présentent un très net avantage par rapport à la MDEA pour des applications mettant en œuvre des gaz présentant des faibles pressions partielles en gaz acides. L'utilisation de ces amines encombrées reste cependant limitée pour des pressions plus importantes en gaz acide, comme c'est le cas dans la plupart des applications de traitement de gaz naturel. Les gains de capacité d'absorption peuvent être réduits lorsque la pression partielle en gaz acide augmente, d'autant plus que le contrôle de la température dans l'absorbeur impose un taux de charge en gaz acide limité en fond de l'absorbeur. Enfin, la taille des unités de traitement du gaz naturel, mettant en œuvre plusieurs centaines de tonnes d'amine, rend souvent l'utilisation de solvant à base de ces amines complexes très coûteuse.

Il est également bien connu de l'homme du métier que la neutralisation partielle d'une solution de MDEA par addition d'une faible quantité d'acide phosphorique, sulfurique, ou d'autres acides ou sels d'ammonium permet de réduire la consommation énergétique au rebouilleur pour la régénération de la solution d'amines, ou permet d'atteindre des teneurs en H₂S plus faibles dans le gaz traité en abaissant le taux de charge en composés acides de l'amine régénérée renvoyée en tête d'absorbeur. Ce type de formulation est décrit par exemple dans le brevet FR 2.313.968 B1 ou la demande de brevet EP 134 948 A2. Le document EP 134 948 A2 indique que ce type de formulations permet de réduire le nombre de plateaux dans l'absorbeur pour une spécification d'absorption d'H₂S donnée, cette réduction permettant de limiter l'absorption du CO₂, et donc d'améliorer la sélectivité. Cependant, aucune quantification de cette amélioration n'est indiquée. Par ailleurs, la protonation de l'amine par un acide, telle que par exemple décrite dans EP 134 948 A2, peut avoir un effet négatif dans le haut de l'absorbeur où l'approche à l'équilibre est critique, ce qui peut dans certains cas aboutir à l'effet inverse et conduire à augmenter le nombre de plateaux, ou à augmenter le débit de solvant circulant (van den Brand et col, Sulphur 2002, 27-30 oct 2002).

Il est également connu que l'utilisation d'un solvant organique en mélange avec une amine tertiaire ou une amine secondaire encombrée, pouvant contenir de l'eau, permet d'améliorer la sélectivité d'absorption de l'H₂S vis-à-vis du CO₂, comme cela est par exemple décrit dans la demande de brevet FR 2.485.945 ou dans les présentations du procédé Sulfinol (Huffmaster et Nasir, Proceedings of the 74th GPA Annual Convention. Gas Treating and Sulfur Recovery. 1995, 133). L'utilisation du solvant organique à des concentrations typiquement comprises entre 2% et 50% (brevet US 4,085,192) ou entre 20% et 50% (demande de brevet FR 2 485 945) apporte une amélioration de sélectivité dans le cas de pressions en gaz acides élevées. Cet avantage est cependant contrebalancé par une co-absorption plus importante des hydrocarbures. Pour les faibles pressions en gaz acides où la quantité de solvant organique doit être réduite afin de conserver un niveau de capture élevé, le gain de sélectivité sera également réduit.

Le document FR 2.996.464 décrit que l'addition de certains composés organiques, notamment ajoutés en très faibles quantités, à une formulation comprenant de l'eau et au moins une amine tertiaire ou secondaire encombrée permet de contrôler la sélectivité de l'absorption lors de l'absorption sélective de l'H₂S par rapport au CO₂ d'un effluent gazeux comprenant de l'H₂S et du CO₂. Ledit composé organique, en augmentant la viscosité dynamique de la solution aqueuse de manière contrôlée, permet d'améliorer la sélectivité d'absorption de l'H₂S vis-à-vis du CO₂. Les composés organiques décrits sont par exemple des polyols, des polyéthers, des copolymères de l'oxyde d'éthylène terminés par des motifs hydrophobes rattachés aux groupements d'oxyde d'éthylène par des groupements uréthanes, des polyacrylamides partiellement ou totalement hydrolysés, des polymères ou copolymères comprenant des unités monomères de type acryliques, méthacryliques, acrylamides, acrylonitrile, N-vinylpyridines, N-vinylpyrrolidinone, N-vinylimidazole, des polysaccharides. Ces composés ne sont pas des amines susceptibles de réagir avec les composés acides tels que le CO₂ du gaz à traiter comme c'est le cas de l'amine tertiaire ou secondaire encombrée de la solution absorbante.

Les inventeurs ont cependant découvert que l'addition de composés organiques viscosifiants présente un effet variable sur la cinétique d'absorption du CO₂ selon la nature du composé organique utilisé. Il reste ainsi difficile de prédire et d'optimiser la sélectivité d'absorption de l'H₂S d'un effluent gazeux contenant du CO₂ par une solution absorbante d'amine et d'un composé organique viscosifiant sur la seule base de sa viscosité.

### Description de l'invention

### Objectifs et résumé de l'invention

La présente invention a notamment pour objectif de fournir des composés qui peuvent entrer dans les formulations de solutions absorbantes à base d'amines mises en œuvre dans la désacidification de gaz, pour une élimination sélective de l'H₂S par rapport au CO₂, surmontant les problèmes de l'art antérieur présentés ci-dessus.

De nouveaux composés azotés, appartenant à la famille des polyamines, et issus de la réaction entre un diglycidyléther de polyol et de la pipérazine, peuvent être avantageusement utilisés dans le domaine de la désacidification de gaz.

Les inventeurs ont mis en évidence que les composés viscosifiants utilisés pour limiter l'absorption du CO₂ ne sont pas équivalents en terme de performances pour leur usage dans des formulations de solutions absorbantes pour un procédé industriel d'élimination sélective de H₂S dans des gaz contenant du CO₂.

De manière inattendue, les inventeurs ont mis en évidence que certains composés appartenant à une famille de polyamines, aussi appelées coamines dans la présente description, issus de la réaction entre un diglycidyléther de polyol et de la pipérazine, et ajoutés notamment en faible quantité à une solution d'amine tertiaire ou secondaire encombrée, appelée amine principale, permettaient d'atteindre des vitesses d'absorption du CO₂ inférieures à celles obtenues avec une solution d'amine principale (tertiaire ou secondaire encombrée) identique sans lesdites coamines, ou avec une solution d'amine principale identique viscosifiée par un composé organique non aminé selon l'art antérieur et de viscosité équivalente ou supérieure à la solution d'amine principale en mélange avec les coamines.

Les inventeurs ont mis en évidence que l'utilisation des polyamines selon la formule générale (I) donnée plus bas, issues de la réaction entre un diglycidyléther de polyol et de la pipérazine, permet d'obtenir de bonnes performances en terme de capacité d'absorption des gaz acides et de sélectivité d'absorption vis-à-vis de l'H₂S, notamment une sélectivité d'adsorption vis à vis de l'H₂S plus importante que des amines de référence telles que la MDEA, notamment en ajoutant ces polyamines en faible quantité à des solutions d'amine de référence.

L'invention porte donc, selon un premier aspect, sur un composé appartenant à la famille des polyamines, issu de la réaction entre un diglycidyléther de polyol et la pipérazine, et répondant à la formule générale **(I)** suivante : 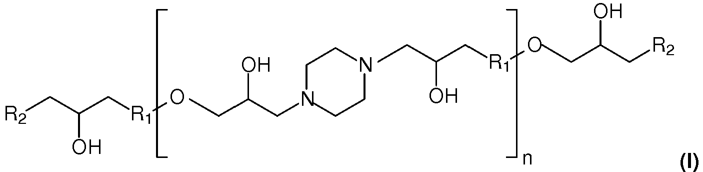 dans laquelle :
- n est un entier compris entre 0 et 30,
- le radical R₁ est choisi parmi les groupes de sous-formules (**g₁**) à (**g₄**) suivants :
   le groupe de formule (**g₁**) : 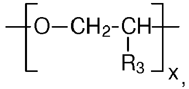 où :
      -- x est un entier compris entre 1 et 100, de préférence entre 1 et 25,
      -- le radical R₃ est indifféremment un atome d'hydrogène, un radical alkyle ou un radical hydroxyalkyle, comportant entre 1 et 4 atomes de carbone,
   le groupe de formule (**g₂**) : 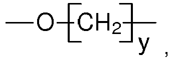 où y est un entier compris entre 3 et 8,
   le groupe de formule (**g₃**) : 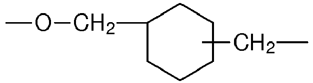
   le groupe de formule (**g₄**) : 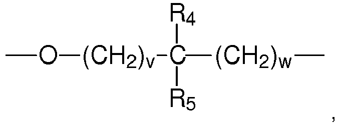 où :
      -- v et w sont des entiers, chacun compris entre 1 et 4, avec la condition selon laquelle la somme de v et w est égale à 2, 3, 4 ou 5,
      -- le radical R₄ est indifféremment un groupe hydroxyle, un radical alkyle ou un radical hydroxyalkyle, comportant entre 1 et 4 atomes de carbone, et
      -- le radical R₅ est indifféremment un atome d'hydrogène ou un groupe hydroxyméthyle (-CH₂OH).
- le radical R₂ est de formule (**g₅**) suivante : 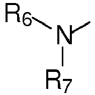 dans laquelle :
   -- le radical R₆ est indifféremment un atome d'hydrogène, un radical alkyle ou un radical hydroxyalkyle, comportant entre 1 et 6 atomes de carbone,
   -- le radical R₇ est indifféremment un radical alkyle ou un radical hydroxyalkyle, comportant entre 1 et 6 atomes de carbone,
   -- les radicaux R₆ et R₇ peuvent être reliés entre eux par une liaison covalente ou par un hétéroatome pour former un hétérocycle à 5, 6, 7 ou 8 atomes lorsque le radical R₆ n'est pas un atome d'hydrogène,
et dans laquelle lorsque n est égal à 0, les radicaux R₆ et R₇ sont reliés entre eux pour former un cycle pipérazine, le radical R₂ répondant à la formule (**g₆**) ci-dessous : 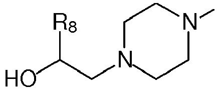 où le radical R₈ est indifféremment un atome d'hydrogène, un radical alkyle ou un radical hydroxyalkyle, comportant entre 1 et 4 atomes de carbone.

De préférence, les radicaux R₆ et R₇ sont reliés entre eux par une liaison covalente ou par un hétéroatome pour former un hétérocycle à 5, 6, 7 ou 8 atomes lorsque le radical R6 n'est pas un atome d'hydrogène.

Dans ce cas, l'hétérocycle peut être un cycle pipérazine.

En particulier, le radical R₂ peut alors répondre à la formule (**g₆**).

L'invention porte, selon un deuxième aspect, sur procédé de synthèse d'un composé de la formule générale (I).

Selon une première mise en œuvre, le procédé de synthèse comprend les réactions suivantes :
- une première réaction d'addition ou de polyaddition d'un diglycidyléther d'un polyol de formule (**IV**) avec de la pipérazine de formule (**V**) pour former un composé intermédiaire de formule (**VI**), 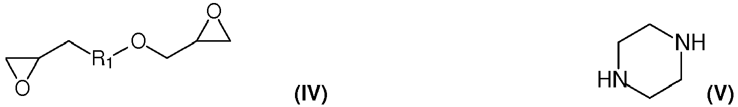 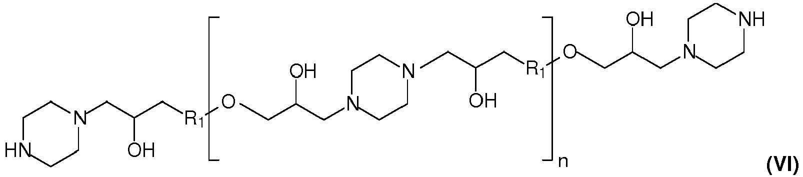 R₁ étant défini comme dans la formule générale (**I**)**,**
   ladite pipérazine étant en excès molaire par rapport audit diglycidyléther d'un polyol,
- une deuxième réaction d'addition dudit composé intermédiaire de formule (**VI**) avec monoépoxyde de formule générale (**VII**) 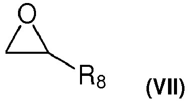 pour produire au moins un composé azoté selon l'invention.

Selon une deuxième mise en œuvre, le procédé de synthèse comprend les réactions suivantes :
- une première réaction d'addition ou de polyaddition d'un diglycidyléther d'un polyol de formule (**IV**) avec de la pipérazine de formule (**V**) pour former un composé intermédiaire de formule (**VI**), 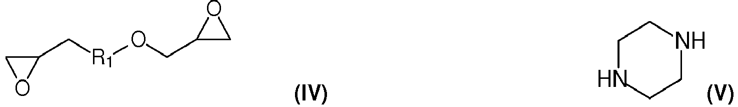 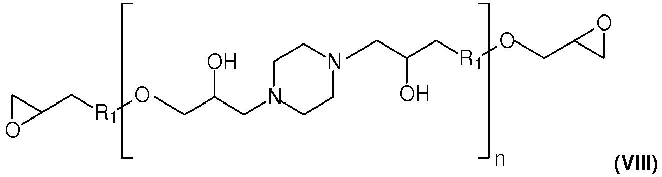 R₁ étant défini comme dans la formule générale (**I**),
   ledit diglycidyléther d'un polyol étant en excès molaire par rapport à ladite pipérazine,
- une deuxième réaction d'addition dudit composé intermédiaire de formule **(VIII)** avec une amine de formule générale **(IX)** 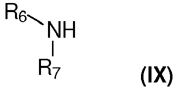
les radicaux R₆ et R₇ étant définis comme dans la formule générale (**I**), pour produire au moins un composé azoté selon l'invention.

En particulier, la première réaction et la deuxième réaction peuvent être conduites en deux étapes successives.

Alternativement, la première réaction et la deuxième réaction peuvent être réalisées en une étape.

De préférence, le diglycidyléther d'un polyol de formule (IV) de la première réaction est choisi dans la liste constituée par :
- le diglycidyléther de l'éthylèneglycol ;
- le diglycidyléther du diéthylèneglycol ;
- le diglycidyléther du triéthylèneglycol ;
- le diglycidyléther de polyéthylèneglycol de masse molaire comprise entre 200 et 2000 g/mole ;
- le diglycidyléther de copolymères de l'éthylèneglycol et du propylèneglycol de masse molaire comprise entre 200 et 2000 g/mole ;
- le diglycidyléther du 1,3-propanediol ;
- le diglycidyléther du 1,4-butanediol ;
- le diglycidyléther du 1,5-pentanediol
- le diglycidyléther du 1,6-hexanediol ;
- le diglycidyléther du 1,8-octanediol ;
- le diglycidyléther du néopentylglycol ;
- le diglycidyléther du 1,4-cyclohexanediméthanol ;
- le diglycidyléther du 1,3-cyclohexanediméthanol ;
- le diglycidyléther du 1,2-cyclohexanediméthanol ;
- les diglycydyléthers du glycérol ;
- les diglycidyléthers du triméthyloléthane ;
- les diglycidyléthers du triméthylolpropane ;
- les diglycidyléthers du pentaérythritol.

De préférence, l'amine secondaire de formule (**IX**) est choisie indifféremment dans le groupe constitué par :
- la diméthylamine ;
- la diéthylamine ;
- le 2-amino-2-méthyl-1-propanol ;
- la la tris(hydroxyméthyl)aminométhane ;
- la morpholine ;
- la N-méthylpipérazine ;
- la N-hydroxyéthylpipérazine ;
- la N-2-hydroxypropylpipérazine ;
- la diéthanolamine ;
- le N-méthylaminoéthanol.

De préférence, le monoépoxyde de formule (**VII**) est choisi indifféremment dans le groupe constitué par :
- l'époxy-1,2-éthane ;
- l'époxy-1,2-propane ;
- l'époxy-1,2-butane ;
- le glycidol.

L'invention porte, selon un troisième aspect, sur un procédé sélective de l'H₂S par rapport au CO₂ d'un effluent gazeux comportant de l'H₂S et du CO₂, dans lequel on effectue une étape d'absorption des composés acides par mise en contact de l'effluent gazeux avec une solution absorbante comportant :
(a) de l'eau,
(b) au moins un composé azoté principal comprenant au moins une fonction amine tertiaire ou une fonction amine secondaire comprenant deux carbones secondaires en position α et α' de l'atome d'azote ou au moins un carbone tertiaire en alpha ou en béta de l'atome d'azote, et
(c) au moins un composé azoté annexe selon l'invention ou susceptible d'être obtenu par un procédé de synthèse selon l'invention.

De préférence, la solution absorbante comporte
- une fraction massique d'eau comprise entre 3,5 % et 94,5 % poids de la solution absorbante, de préférence entre 39,5 % et 79,5 % poids,
- une fraction massique du composé azoté principal comprise entre 5 % et 95 % en poids de la solution absorbante, de préférence entre 20 et 60 % poids,
- une fraction massique du composé azoté annexe comprise entre 0,5 % et 25 % poids de la solution absorbante, de préférence entre 1 % et 10 % poids,
la fraction massique du composé azoté principal étant supérieure à celle de la composé azoté annexe.

De préférence, le composé azoté principal est choisi dans le groupe constitué par :
- la N-méthyldiéthanolamine ;
- la triéthanolamine ;
- la diéthylmonoéthanolamine ;
- la diméthylmonoéthanolamine ;
- l'éthyldiéthanolamine ;
- les monoalcanolamines tertiaires de la famille des 3-alcoxypropylamines de la liste constituée par la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, et la N-isopropyl-N-(3-méthoxypropyl)-1-amino-2-butanol ;
- les diamines de la liste constituée par la 1,2-bis(2-diméthylaminoéthoxy)éthane, la 1,2-bis(2-diéthylaminoéthoxy)éthane et la 1,2-bis(2-pyrolidinoéthoxy)éthane ;
- les diamines de la famille du 1,3-diamino-2-propanol de la liste constituée par le 1,3-Bis(diméthylamino)-2-propanol, le (1-diméthylamino-3-ter-butylamino)-2-propanol, le 1,3 Bis(ter-butylamino)-2-propanol, le 1,3-bis(diéthylamino)-2-propanol, le 1,3-bis(méthylamino)-2-propanol, le 1,3-bis(éthylméthylamino)-2-propanol, le 1,3 bis(n-propylamino)-2-propanol, le 1,3-bis(isopropylamino)-2-propanol, le 1,3 bis(n-butylamino)-2-propanol, le 1,3-bis(isobutylamino)-2-propanol, le 1,3-bis(pipéridino)-2-propanol, et le 1,3-bis(pyrrolidino)-2-propanol, le N,N,N'-triméthyl-N'-hydroxyéthyl-1,3-diamino-2-propanol ;
- les dihydroxyalkylamines de la liste constituée par le N-(2'-hydroxyéthyl)-2-amino-2-méthyl-1-propanol, le N-(2'-hydroxypropyl)-2-amino-2-méthyl-1-propanol, le N-(2'-hydroxybutyl)-2-amino-2-méthyl-1-propanol, le (N-méthyl-N-hydroxyéthyl)-3-amino-2-butanol ;
- les diamines de la famille des bis(amino-3-propyl)ether ou des (amino-2-éthyl)-(amino-3-propyl)éthers de la liste constituée par le bis(diméthylamino-3-propyl)éther, bis(diéthylamino-3-propyl)-éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther ;
- les diamines tertiaires béta-hydroxylées de la liste constituée par le 1-diméthylamino-3-(2-diméthylaminoéthoxy)-2-propanol, le 1,1'-oxybis[3-(diméthylamino)-2-propanol], le N,N,N',N'-(tétraméthyl)-1,6-diamino-2,5-hexanediol, le N,N,N',N'-(tétraméthyl)-1,7-diamino-2,6-heptanediol, le N,N,N',N'-(tétraméthyl)-1,8-diamino-2,7-octanediol, le N,N,N',N'-(tétraméthyl)-1,9-diamino-2,8-nonanediol, le N,N,N',N'-(tétraméthyl)-1,10-diamino-2,9-décanediol ;
- les di-(2-hydroxyalkyl)-monoamines de la liste constituée par le 1-[(2-hydroxyéthyl)méthylamino]-2-méthyl-2-propanol, le 1,1'-(méthylimino)-bis-[2-méthyl-2-propanol], le 2-[(2-hydroxy-2-méthylpropyl)amino]-2-méthyl-1-propanol, le 2-[(2-hydroxy-2-méthylpropyl)amino]-1-butanol, le Bis(2-hydroxy-2méthylpropyl)amine ;
- les 4-(aminoéthyl)-morpholines tertiaires encombrées de la liste constituée par le 1-(4-morpholino)-2-(méthylisopropylamino)-éthane, le 1-(4-morpholino)-2-(méthyltertiobutylamino)-éthane, le 1-(4-morpholino)-2-(diisopropylamino)-éthane, le 1-(4-morpholino)-2-(1-pipéridinyl)-éthane ;
- les diamines de la liste constituée par la (N-morpholinoéthyl) isopropylamine, la (N-pipéridinoéthyl) isopropylamine, (N-morpholinoéthyl) tertiobutylamine ;
- les amines de la famille des N-alkyl-3-hydroxypipéridines et N-alkyl-4-hydroxypipéridines de la liste constituée par la N-méthyl-4-hydroxy-pipéridine, la N-éthyl-3-hydroxypipéridine, la N-méthyl-3-hydroxy-pipéridine ;
- les alkylaminopipérazines que sont la 1-méthyl-4-(3-diméthylaminopropyl)-pipérazine, la 1-éthyl-4-(diéthylaminoéthyl)-pipérazine.

La solution absorbante peut comporter en outre un solvant physique choisi dans le groupe constitué par le méthanol, l'éthanol, le 2-éthoxyéthanol, l'alcool benzylique, le triéthylèneglycoldiméthyléther, le tétraéthylèneglycoldiméthyléther, le pentaéthylèneglycoldiméthyléther, l'hexaéthylèneglycoldiméthyléther, l' heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, et le tributylphosphate, le carbonate de propylène.

L'effluent gazeux peut être choisi parmi le gaz naturel, les gaz de synthèse, les gaz de raffinerie, les gaz acides issus d'une unité aux amines, les gaz issus d'une unité de réduction en queue du procédé Claus, les gaz de fermentation de biomasse.

D'autres objets et avantages de l'invention apparaîtront à la lecture de la description qui suit d'exemples de réalisations particuliers de l'invention, donnés à titre d'exemples non limitatifs, la description faisant également référence à la figure annexée décrite ci-après.

### Brève description de la figure

La figure 1 représente un schéma de principe de mise en œuvre d'un procédé de traitement de gaz acides.
La figure 2 illustre un procédé de synthèse d'un composé selon l'invention selon une première mise en œuvre.
La figure 3 illustre un procédé de synthèse d'un composé selon l'invention selon une deuxième mise en œuvre.

Dans les figures illustrant la préparation des composés azotés selon l'invention, les flèches représentent des étapes de réaction. Il s'agit de schémas réactionnels. Les illustrations du procédé de synthèse selon l'invention ne comportent pas l'ensemble des composantes nécessaires à sa mise en œuvre. Seuls les éléments nécessaires à la compréhension de l'invention y sont représentés, l'homme du métier étant capable de compléter cette représentation pour mettre en œuvre l'invention.

### Description détaillée de l'invention

Les nouveaux composés azotés selon l'invention sont des polyamines issues de la réaction entre un diglycidyléther de polyol et de la pipérazine, et répondent à la formule générale **(I)** suivante : 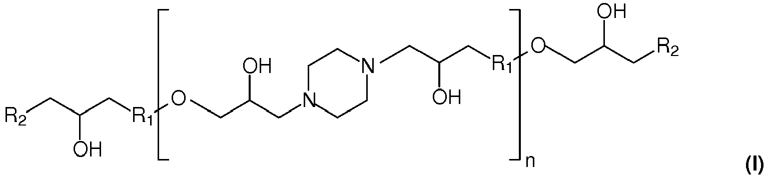 dans laquelle :
- n est un entier compris entre 0 et 30,
- le radical R₁ est choisi parmi les groupes de sous-formules (**g₁**) à (**g₄**) suivants :
   - le groupe de formule (**g₁**) : 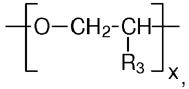 où : x est un entier compris entre 1 et 100, de préférence entre 1 et 25, et
      le radical R₃ est choisi indifféremment parmi un atome d'hydrogène, un radical alkyle comportant entre 1 et 4 atomes de carbone, et un radical hydroxyalkyle comportant entre 1 et 4 atomes de carbone.
   - le groupe de formule (**g₂**) : 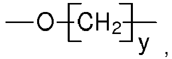 où y est un entier compris entre 3 et 8
   - le groupe de formule (**g₃**) : 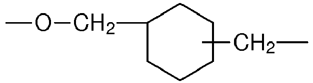
   - le groupe de formule (**g₄**) : 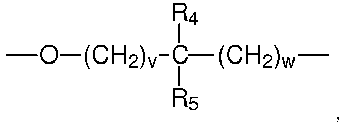 où :
      v et w sont des entiers, chacun compris entre 1 et 4, avec la condition selon laquelle la somme de v et w est égale à 2, 3, 4 ou 5,
      le radical R₄ est choisi indifféremment parmi un groupe hydroxyle, un radical alkyle comportant entre 1 et 4 atomes de carbone, et un radical hydroxyalkyle comportant entre 1 et 4 atomes de carbone, et
      le radical R₅ est choisi indifféremment parmi un atome d'hydrogène et un groupe hydroxyméthyle (-CH₂OH).
- le radical R₂ est de formule (**g₅**) suivante : 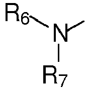 dans laquelle :
   le radical R₆ est choisi indifféremment parmi un atome d'hydrogène, un radical alkyle comportant entre 1 et 6 atomes de carbone, et un radical hydroxyalkyle comportant entre 1 et 6 atomes de carbone,
   le radical R₇ est choisi indifféremment parmi un radical alkyle comportant entre 1 et 6 atomes de carbone, et un radical hydroxyalkyle comportant entre 1 et 6 atomes de carbone, et
   les radicaux R₆ et R₇ peuvent être reliés entre eux par une liaison covalente ou par un hétéroatome pour former un hétérocycle à 5, 6, 7 ou 8 atomes lorsque le radical R₆ n'est pas un atome d'hydrogène.

Lorsque l'hétérocycle est un cycle pipérazine, le radical R₂ peut être de formule **(g₆)** suivante : 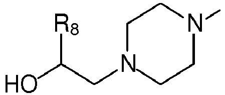 avec le radical R₈ choisi indifféremment parmi un atome d'hydrogène, un radical alkyle comportant entre 1 et 4 atomes de carbone, et un radical hydroxyalkyle comportant entre 1 et 4 atomes de carbone.

Dans la formule générale (I), lorsque n est égal à 0, les radicaux R₆ et R₇ sont reliés entre eux pour former un cycle pipérazine. Dans ce cas, le radical R₂ répond à la formule **(g₆)** ci-dessus.

Selon la forme que prend le radical R₂, la formule générale (**I**) peut s'écrire plus précisément selon l'une des formules (**II**) et (**III**) ci-dessous : 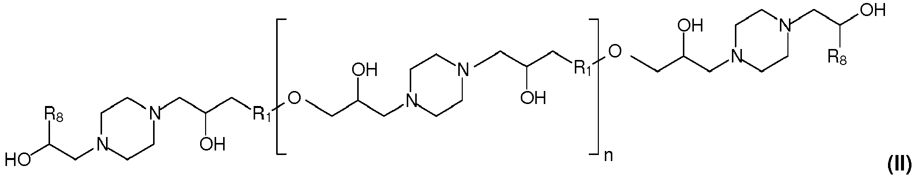 dans laquelle le radical R₂ répond à la formule **(g₆)** ci-dessus. 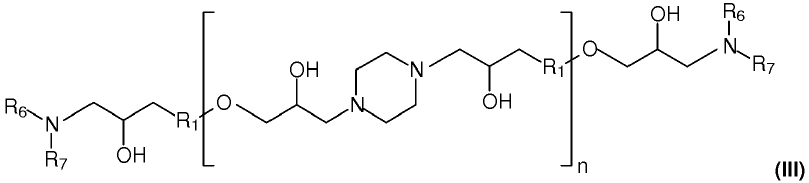 dans laquelle le radical R₂ répond à la formule (**g₅**) ci-dessus.

### Synthèse d'un composé selon l'invention

Les composés azotés selon la formule générale (**I**) peuvent être synthétisés selon toute voie permise par la chimie organique.

Avantageusement, la synthèse des composés de l'invention repose sur une première réaction d'addition ou de polyaddition entre un diglycidyléther d'un polyol de formule (**IV**) suivante : 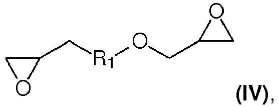 et de la pipérazine de formule (**V**) suivante :

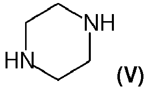

Cette réaction conduit au motif (-X-) suivant :

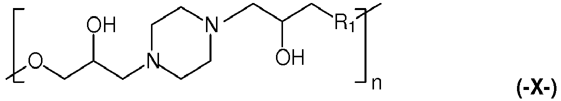

Selon les quantités relatives de pipérazine et du diglycidyléther de polyol employées, deux principaux modes de synthèse permettent la préparation des composés selon la formule générale (**I**).

Le diglycidyléther de polyol peut être choisi dans la liste de composés constituée par :
- le diglycidyléther de l'éthylèneglycol ;
- le diglycidyléther du diéthylèneglycol ;
- le diglycidyléther du triéthylèneglycol ;
- le diglycidyléther de polyéthylèneglycol de masse molaire comprise entre 200 et 2000 g/mole ;
- le diglycidyléther de copolymères de l'éthylèneglycol et du propylèneglycol de masse molaire comprise entre 200 et 2000 g/mole ;
- le diglycidyléther du 1,3-propanediol ;
- le diglycidyléther du 1,4-butanediol ;
- le diglycidyléther du 1,5-pentanediol
- le diglycidyléther du 1,6-hexanediol ;
- le diglycidyléther du 1,8-octanediol ;
- le diglycidyléther du néopentylglycol ;
- le diglycidyléther du 1,4-cyclohexanediméthanol ;
- le diglycidyléther du 1,3-cyclohexanediméthanol ;
- le diglycidyléther du 1,2-cyclohexanediméthanol ;
- les diglycydyléthers du glycérol ;
- les diglycidyléthers du triméthyloléthane ;
- les diglycidyléthers du triméthylolpropane ;
- les diglycidyléthers du pentaérythritol.

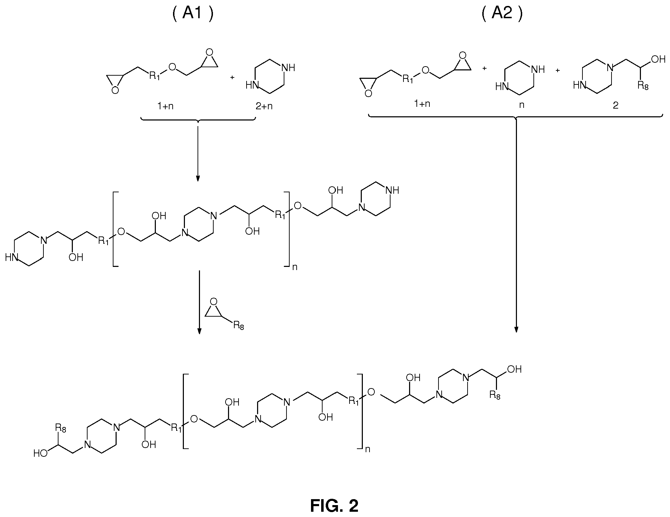

### Synthèse d'un composé selon l'invention selon un premier mode : voies de synthèse A1 et A2 (figure 2) :

La figure 2 illustre un premier mode de synthèse des composés selon l'invention, dans lequel un excès molaire de pipérazine par rapport au diglycidyléther de polyol est mis en œuvre.

Selon ce mode on réalise :
- une première réaction qui est une réaction d'addition ou de polyaddition du diglycidyléther d'un polyol de formule (**IV**) avec un excès molaire de pipérazine. Dans ce cas, le motif (**-X-**) peut être encadré par des extrémités de chaînes pipérazines ce qui conduit à la formule générale (**VI**) suivante : 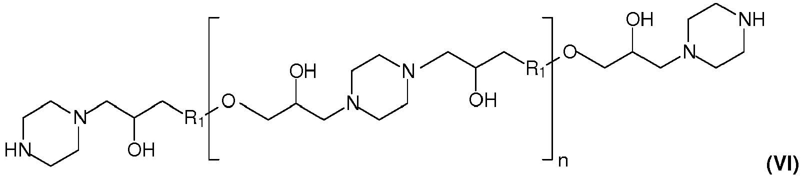 R₁ et n sont définis comme précédemment en relation avec la formule générale (I).

Par excès molaire de pipérazine par rapport au diglycidyléther de polyol, on entend l'excès qui permet de garantir l'obtention de la structure (**VI**).
- une deuxième réaction qui est une réaction d'addition entre le composé de formule **(VI)** et un monoépoxyde de formule générale (**VII**) ci-dessous permet d'obtenir un composé selon l'invention répondant à la formule générale **(I)**.

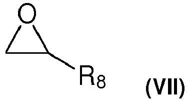

Dans la formule (**VII**), le radical R₈ est défini comme précédemment en relation avec la formule générale (**g₆**).

Ce monoépoxyde peut être choisi par exemple, sans être limitatif, parmi l'époxy-1,2-éthane, l'époxy-1,2-propane, l'époxy-1,2-butane ou le glycidol.

Selon ce premier mode, la synthèse peut être effectuée en deux étapes (voie de synthèse A1 sur la figure 2) ou en une étape (voie de synthèse A2 sur la figure 2). Selon la voie A2, une seule étape est opérée dans laquelle on fait réagir simultanément le diglycidyléther de polyol, la pipérazine et le produit de la monoaddition du monoépoxyde de formule (**VII**) sur de la pipérazine, qui a la formule (**VII'**) ci-dessous, pour conduire au composé azoté selon la formule générale (**I**).

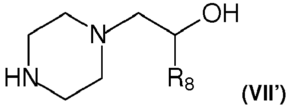

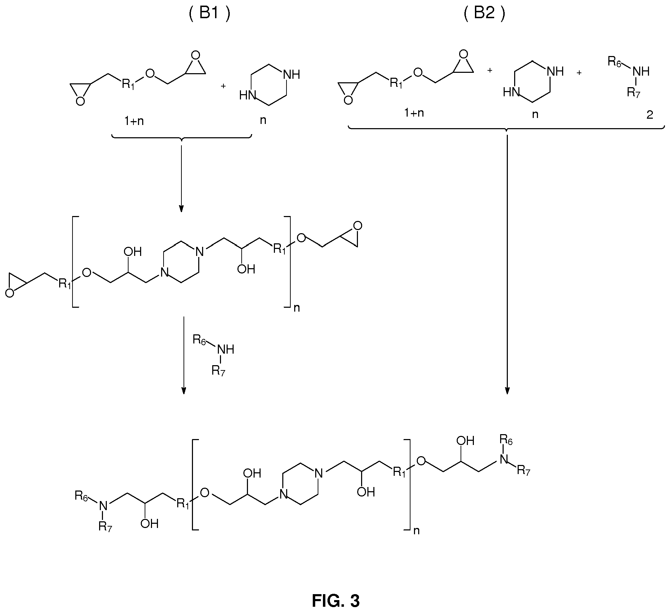

### Synthèse d'un composé selon l'invention selon un deuxième mode : voies de synthèse B1 et B2 (figure 3) :

La figure 3 illustre un deuxième mode de synthèse des composés selon l'invention, dans lequel un excès molaire de diglycidyléther de polyol par rapport à la pipérazine est mis en œuvre.

Selon ce mode on réalise :
- une première réaction qui est une réaction d'addition ou de polyaddition de la pipérazine avec un excès molaire d'un diglycidyléther d'un polyol de formule (**IV**). Dans ce cas, le motif (**-X-**) peut être encadré par des extrémités de chaînes glycidyles ce qui conduit à la formule générale (**VIII**) suivante : 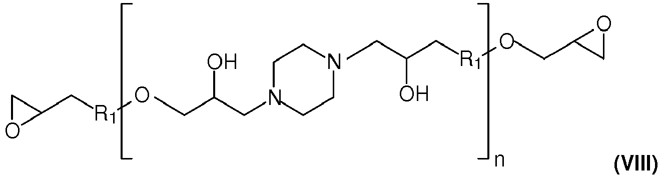 R₁ et n sont définis comme précédemment en relation avec la formule générale (**I**).

Par excès molaire du diglycidyléther de polyol par rapport à la pipérazine, on entend l'excès qui permet de garantir l'obtention de la structure (**VIII**).
- une deuxième réaction qui est une réaction d'addition entre le composé de formule **(VIII)** et une amine de formule générale **(IX)** ci-dessous permet d'obtenir un composé selon l'invention répondant à la formule générale **(I).**

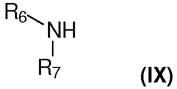

Dans la formule (**IX**), les radicaux R₆ et R₇ sont définis comme précédemment en relation avec la formule générale **(I).**

Cette amine peut être choisie par exemple, sans être limitatif, parmi la diméthylamine, la diéthylamine, la 2-amino-2-méthyl-1-propanol, la tris(hydroxyméthyl)aminométhane, la morpholine, la N-méthylpipérazine, la N-hydroxyéthylpipérazine, la N-2-hydroxypropylpipérazine, la diéthanolamine, la N-méthylaminoéthanol.

Selon ce deuxième mode, la synthèse peut être effectuée en deux étapes (voie de synthèse B1 sur la figure 3) ou en une étape (voie de synthèse B2 sur la figure 3). Selon la voie B2, une seule étape est opérée dans laquelle on fait réagir simultanément le diglycidyléther de polyol, la pipérazine et l'amine de formule générale **(IX)** pour conduire au composé azoté selon la formule générale **(I)**.

Les étapes des différents modes de synthèse sont réalisées dans des conditions adéquates permettant les réactions décrites, c'est-à-dire les conditions permettant la réalisation de ladite réaction chimique, comprenant généralement un milieu réactionnel donné et des conditions opératoires données (temps de réaction, température, catalyseurs, etc.). Par exemple, la réaction entre le diglycidyléther de polyol de formule **(IV)** et la pipérazine est de préférence réalisée à une température comprise entre 0°C et 140°C, par exemple entre la température ambiante et 140°C, par exemple à 100°C.

D'autres étapes visant par exemple à éliminer certains composés non désirés, comme des étapes de filtration, ou de distillation, peuvent également être réalisées dans les différentes voies de synthèse décrites sans pour autant sortir du cadre de la présente invention.

### Utilisation des composés selon l'invention dans le traitement d'effluents gazeux

Les composés selon l'invention peuvent être utilisés dans différents domaines de la chimie, et peuvent être avantageusement utilisés dans le domaine du traitement de gaz d'origine industrielle et du gaz naturel.

La présente invention propose de réaliser une élimination sélective de l'H₂S par rapport au CO₂ d'un effluent gazeux comportant de l'H₂S et du CO₂, en mettant en œuvre une solution aqueuse comprenant une amine principale et au moins un composé azoté selon la formule générale (I). La solution est mise en contact avec l'effluent gazeux pour éliminer sélectivement l'H₂S qu'il contient.

L'utilisation des polyamines selon l'invention permet, en association avec une amine principale tertiaire ou secondaire encombrée, d'obtenir de bonnes performances en termes de sélectivité d'absorption de l'H₂S par rapport au CO₂, notamment une sélectivité plus importante qu'avec des solutions aqueuses d'amines de référence telles que la N-méthyldiéthanolamine (MDEA), pour une capacité cyclique d'absorption des gaz acides, notamment de l'H₂S, équivalente ou supérieure.

Le procédé comprend une étape d'absorption des composés acides par mise en contact de l'effluent gazeux avec une solution absorbante comportant :
(a) de l'eau,
(b) au moins un composé azoté principal comprenant au moins une fonction amine tertiaire ou une fonction amine secondaire comprenant deux carbones secondaires en position α et α' de l'atome d'azote ou au moins un carbone tertiaire en alpha ou en béta de l'atome d'azote, et
(c) au moins un composé azoté annexe selon la formule générale **(I).**

On se réfèrera également à l'expression « fonction amine secondaire encombrée » pour désigner une fonction amine secondaire d'un composé azoté, comportant deux carbones secondaires en position α et α' de l'atome d'azote ou au moins un carbone tertiaire en alpha ou en béta de l'atome d'azote.

On définira ici un carbone tertiaire comme étant un atome de carbone lié à trois atomes de carbone, et un carbone secondaire comme étant un atome de carbone lié à deux atomes de carbone.

Par composé azoté principal, ou amine principale, on entend le composé azoté, comprenant au moins une fonction amine tertiaire ou une fonction amine secondaire encombrée et ne répondant pas à la formule générale **(I)**. La concentration massique du composé principal dans la solution absorbante est plus importante que celle du composé azoté annexe selon la formule générale **(I).** Il est entendu que dans le cas où il y a plusieurs composés azotés, principaux et/ou annexes, c'est la concentration massique totale en lesdits composés azotés principaux qui est plus importante que la concentration massique (totale) en composé(s) azoté(s) annexe(s).

Par composé azoté annexe, on entend la polyamine répondant à la formule générale **(I),** obtenu par réaction entre un diglycidyléther de polyol et de la pipérazine tel que décrit plus haut. Le composé azoté annexe selon la formule générale (I) est aussi appelé coamine dans la présente description. Le composé azoté annexe a une concentration massique totale inférieure à celle du composé azoté principal, et a un effet viscosifiant, c'est-à-dire qu'il a pour effet d'augmenter la viscosité dynamique de la solution absorbante comparativement à une même solution sans ledit composé azoté annexe.

L'ajout de coamines, en particulier en faible quantités, dans une solution absorbante aqueuse d'une amine principale telle que définie ci-dessus, permet de limiter l'absorption du CO₂, plus précisément la vitesse d'absorption du CO₂, lors de la mise en contact avec le gaz à désacidifier, et ainsi d'améliorer l'élimination sélective de l'H₂S par rapport au CO₂.

### Composition de la solution absorbante

La solution absorbante comporte de préférence :
- une fraction massique de coamine de formule générale **(I)** comprise entre 0,5 % et 25 % poids de la solution absorbante, de préférence entre 1 % et 10 % poids,
- une fraction massique d'amine principale comprise entre 5 % et 95 % en poids de la solution absorbante, de préférence entre 20 et 60 % poids,
- une fraction massique d'eau comprise entre 3,5 % et 94,5 % poids de la solution absorbante, de préférence entre 39,5 % et 79,5 % poids,
la fraction massique de l'amine principale étant supérieure à celle des polyamines de formule générale **(I)**.

Si la solution absorbante comporte plusieurs amines principales, et/ou plusieurs coamines, les gammes de concentration données font référence à la concentration totale en amines principales et la concentration totale en coamines.

Les gammes de concentration données s'entendent bornes incluses.

Sauf s'il en est indiqué autrement, les concentrations des différents composés sont exprimées en pourcentage poids de la solution absorbante dans la présente description.

La somme des fractions massiques exprimées en % poids des différents composés de la solution absorbante est égale à 100 % en poids de la solution absorbante.

De préférence, le composé azoté principal est choisi dans le groupe constitué par :
- la N-méthyldiéthanolamine ;
- la triéthanolamine ;
- la diéthylmonoéthanolamine ;
- la diméthylmonoéthanolamine ;
- l'éthyldiéthanolamine ;
- les monoalcanolamines tertiaires de la famille des 3-alcoxypropylamines de la liste constituée par la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, et la N-isopropyl-N-(3-méthoxypropyl)-1-amino-2-butanol ;
- les diamines de la liste constituée par la 1,2-bis(2-diméthylaminoéthoxy)éthane, la 1,2-bis(2-diéthylaminoéthoxy)éthane et la 1,2-bis(2-pyrolidinoéthoxy)éthane ;
- les diamines de la famille du 1,3-diamino-2-propanol de la liste constituée par le 1,3-Bis(diméthylamino)-2-propanol, le (1-diméthylamino-3-ter-butylamino)-2-propanol, le 1,3 Bis(terbutylamino)-2-propanol, le 1,3-bis(diéthylamino)-2-propanol, le 1,3-bis(méthylamino)-2-propanol, le 1,3-bis(éthylméthylamino)-2-propanol, le 1,3 bis(n-propylamino)-2-propanol, le 1,3-bis(isopropylamino)-2-propanol, le 1,3 bis(n-butylamino)-2-propanol, le 1,3-bis(isobutylamino)-2-propanol, le 1,3-bis(pipéridino)-2-propanol, et le 1,3-bis(pyrrolidino)-2-propanol, le N,N,N'-triméthyl-N'-hydroxyéthyl-1,3-diamino-2-propanol ;
- les dihydroxyalkylamines de la liste constituée par le N-(2'-hydroxyéthyl)-2-amino-2-méthyl-1-propanol, le N-(2'-hydroxypropyl)-2-amino-2-méthyl-1-propanol, le N-(2'-hydroxybutyl)-2-amino-2-méthyl-1-propanol, le (N-méthyl-N-hydroxyéthyl)-3-amino-2-butanol ;
- les diamines de la famille des bis(amino-3-propyl)ether ou des (amino-2-éthyl)-(amino-3-propyl)éthers de la liste constituée par le bis(diméthylamino-3-propyl)éther, le bis(diéthylamino-3-propyl)-éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther ;
- les diamines tertiaires béta-hydroxylées de la liste constituée par le 1-diméthylamino-3-(2-diméthylaminoéthoxy)-2-propanol, le 1,1'-oxybis[3-(diméthylamino)-2-propanol], le N,N,N',N'-(tétraméthyl)-1,6-diamino-2,5-hexanediol, le N,N,N',N'-(tétraméthyl)-1,7-diamino-2,6-heptanediol, le N,N,N',N'-(tétraméthyl)-1,8-diamino-2,7-octanediol, le N,N,N',N'-(tétraméthyl)-1,9-diamino-2,8-nonanediol, le N,N,N',N'-(tétraméthyl)-1,10-diamino-2,9-décanediol ;
- les di-(2-hydroxyalkyl)-monoamines de la liste constituée par le 1-[(2-hydroxyéthyl)méthylamino]-2-méthyl-2-propanol, le 1,1'-(méthylimino)-bis-[2-méthyl-2-propanol], le 2-[(2-hydroxy-2-méthylpropyl)amino]-2-méthyl-1-propanol, le 2-[(2-hydroxy-2-méthylpropyl)amino]-1-butanol, le Bis(2-hydroxy-2méthylpropyl)amine ;
- les 4-(aminoéthyl)-morpholines tertiaires encombrées de la liste constituée par le 1-(4-morpholino)-2-(méthylisopropylamino)-éthane, le 1-(4-morpholino)-2-(méthyltertiobutylamino)-éthane, le 1-(4-morpholino)-2-(diisopropylamino)-éthane, le 1-(4-morpholino)-2-(1-pipéridinyl)-éthane ;
- les diamines de la liste constituée par la (N-morpholinoéthyl) isopropylamine, la (N-pipéridinoéthyl) isopropylamine, (N-morpholinoéthyl) tertiobutylamine ;
- les amines de la famille des N-alkyl-3-hydroxypipéridines et N-alkyl-4-hydroxypipéridines de la liste constituée par la N-méthyl-4-hydroxy-pipéridine, la N-éthyl-3-hydroxypipéridine, la N-méthyl-3- hydroxy-pipéridine ;
- les alkylaminopipérazines que sont la 1-méthyl-4-(3-diméthylaminopropyl)-pipérazine, la 1-éthyl-4-(diéthylaminoéthyl)-pipérazine.

Selon un mode de réalisation, la solution absorbante peut contenir des composés organiques non réactifs vis à vis des composés acides (couramment nommé "solvants physiques"), qui permettent d'augmenter la solubilité d'au moins un ou plusieurs composés acides de l'effluent gazeux. Par exemple, la solution absorbante peut comporter entre 5% et 50% poids de solvant physique tel que des alcools, des éthers, des étheralcools, des éthers de glycol et de polyéthylèneglycol, des thioéthers de glycol, des esters et alkoxyesters de glycol et de polyéthylèneglycol, des esters de glycérol, des lactones, des lactames, des pyrrolidones N-alkylées, des dérivés de la morpholine, de la morpholin-3-one, des imidazoles et des imidazolidinones, des pipéridones N-alkylées, des cyclotétraméthylènesulfones, des N-alkylformamides, des N-alkylacétamides, des éthers-cétones des carbonates d'alkyles ou des phosphates d'alkyles et leur dérivés.

A titre d'exemple et de façon non limitative, il peut s'agir du méthanol, de l'éthanol, du 2-éthoxyéthanol, de l'alcool benzylique, du triéthylèneglycoldiméthyléther, du tétraéthylèneglycoldiméthyléther, du pentaéthylèneglycoldiméthyléther, de l' hexaéthylèneglycoldiméthyléther, de l'heptaéthylèneglycoldiméthyléther, de l' octaéthylèneglycoldiméthyléther, du butoxyacétate de diéthylèneglycol, du triacétate de glycérol, du sulfolane, de la N-méthylpyrrolidone, de la N-méthylmorpholin-3-one, du N,N-diméthylformamide, de la N-formyl-morpholine, de la N,N-diméthyl-imidazolidin-2-one, du N-méthylimidazole, de l'éthylèneglycol, du diéthylèneglycol, du triéthylèneglycol, du thiodiglycol, du carbonate de propylène, du tributylphosphate.

### Nature des effluents gazeux

Les solutions absorbantes comprenant au moins un composé azoté selon l'invention peuvent être mises en œuvre pour désacidifier les effluents gazeux suivants : le gaz naturel, les gaz de synthèse, les gaz de raffinerie, les gaz acides issus d'une unité aux amines, les gaz issus d'une unité de réduction en queue du procédé Claus, les gaz de fermentation de biomasse. Ces effluents gazeux contiennent un ou plusieurs des composés acides suivants : le CO₂, l'H₂S, des mercaptans (par exemple le méthylmercaptan (CH₃SH), l'éthylmercaptan (CH₃CH₂SH), le propylmercaptan (CH₃CH₂CH₂SH)), le COS, le CS₂, le SO₂.

Le procédé de désacidification utilisant les composés selon l'invention peut par exemple être mis en œuvre pour désacidifier un gaz de synthèse. Le gaz de synthèse contient du monoxyde de carbone CO, de l'hydrogène H₂ (généralement dans un ratio H₂/CO égal à 2), de la vapeur d'eau (généralement à saturation à la température où le lavage est effectué) et du CO₂ (de l'ordre de la dizaine de pourcents). La pression est généralement comprise entre 20 et 30 bar, mais peut atteindre jusqu'à 70 bar. Il peut contenir, en outre, des impuretés soufrées (H₂S, COS, etc.), azotées (NH₃, HCN) et halogénées.

Le procédé de désacidification utilisant les composés selon l'invention peut également être mis en œuvre pour désacidifier un gaz naturel. Le gaz naturel est constitué majoritairement d'hydrocarbures gazeux, mais peut contenir plusieurs des composés acides suivants : le CO₂, l'H₂S, des mercaptans, du COS, du CS₂. La teneur de ces composés acides est très variable et peut aller jusqu'à 70 % en volume pour le CO₂ et jusqu'à 40 % en volume pour l'H₂S. La température du gaz naturel peut être comprise entre 20°C et 100°C. La pression du gaz naturel à traiter peut être comprise entre 10 et 200 bar. L'invention peut être mise en œuvre pour atteindre des spécifications généralement imposées sur le gaz désacidifié, qui sont moins de 2 % de CO₂, moins de 4 ppm d'H₂S, et moins de 50 ppm, voire moins de 10 ppm, volume de soufre total.

### Procédé d'élimination des composés acides dans un effluent gazeux

Le procédé d'élimination sélective de l'H₂S d'un effluent gazeux contenant du CO₂ comprend une étape d'absorption des composés acides que sont l'H₂S et le CO₂ par mise en contact de l'effluent gazeux avec une solution absorbante selon l'invention.

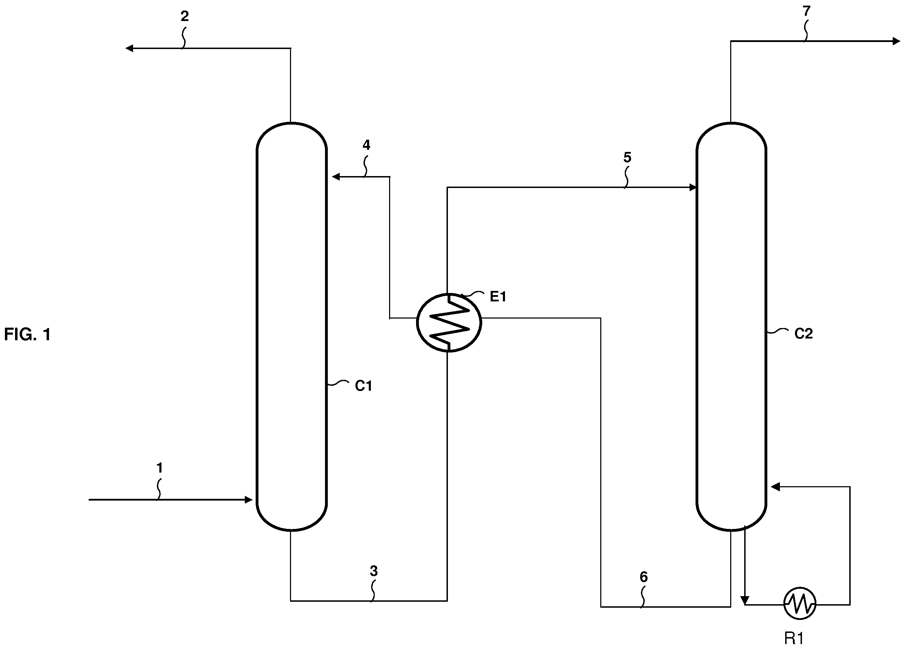

En référence à la figure 1, l'étape d'absorption consiste à mettre en contact l'effluent gazeux 1 avec la solution absorbante 4. L'effluent gazeux 1 est introduit en fond de colonne d'absorption C1, la solution absorbante est introduite en tête de la colonne C1. La colonne C1 est munie de moyen de mise en contact entre gaz et liquide, par exemple un garnissage vrac, un garnissage structuré ou des plateaux de distillation. Lors du contact, les fonctions amines des molécules de la solution absorbante réagissent avec les composés acides contenus dans l'effluent, de manière à obtenir un effluent gazeux appauvri en composés acides 2, notamment appauvri en H₂S et CO₂, et évacué en tête de la colonne C1, et une solution absorbante enrichie en ces mêmes composés acides 3 évacuée en fond de colonne C1, pour être de préférence régénérée.

L'étape d'absorption sélective de l'H₂S peut être réalisée à une pression dans la colonne d'absorption C1 comprise entre 1 bar et 200 bar, de préférence entre 20 bar et 100 bar pour le traitement d'un gaz naturel, et à une température dans la colonne d'absorption C1 comprise entre 20°C et 100°C, préférentiellement comprise entre 30°C et 90°C, voire entre 30°C et 60°C.

L'utilisation d'un composé azoté selon la formule générale **(I),** ajouté à la solution aqueuse comprenant les amines tertiaires ou secondaires encombrées selon l'invention permet d'obtenir une sélectivité d'absorption de l'H₂S vis-à-vis du CO₂ plus importante que celle atteinte avec des solutions comprenant les mêmes amines sans le composé azoté selon la formule générale **(I)**. L'augmentation de la viscosité dynamique engendrée par l'ajout du composé selon l'invention a pour effet de diminuer l'absorption du CO₂ relativement à celle de l'H₂S, de manière beaucoup plus performante que par l'ajout d'un composé viscosifiant selon l'art antérieur.

L'étape d'absorption peut être suivie d'une étape de régénération de la solution absorbante enrichie en composés acides, par exemple tel que représenté schématiquement sur la figure 1.

L'étape de régénération consiste notamment à chauffer et, éventuellement à détendre, la solution absorbante enrichie en composés acides afin de libérer les composés acides sous forme gazeuse. La solution absorbante enrichie en composés acides 3 est introduite dans l'échangeur de chaleur E1, où elle est réchauffée par le flux 6 provenant de la colonne de régénération C2. La solution 5 réchauffée en sortie de l'échangeur E1 est introduite dans la colonne de régénération C2.

La colonne de régénération C2 est équipée d'internes de mise en contact entre gaz et liquide, par exemple des plateaux, des garnissages en vrac ou structurés. Le fond de la colonne C2 est équipé d'un rebouilleur R1 qui apporte la chaleur nécessaire à la régénération en vaporisant une fraction de la solution absorbante. Dans la colonne C2, sous l'effet de la mise en contact de la solution absorbante 5 avec la vapeur produite par le rebouilleur, les composés acides sont libérés sous forme gazeuse et évacués en tête de la colonne C2 par le conduit 7. La solution absorbante régénérée 6, c'est-à-dire appauvrie en composés acides, est refroidie dans l'échangeur E1. La solution refroidie 4 est ensuite recyclée dans la colonne d'absorption C1.

L'étape de régénération du procédé selon l'invention peut être réalisée par régénération thermique, éventuellement complétée par une ou plusieurs étapes de détente. Par exemple, la solution absorbante enrichie en composés acides 3 peut être envoyée dans un premier ballon de détente (non représenté), avant son passage dans l'échangeur de chaleur E1. Dans le cas d'un gaz naturel, la détente permet d'obtenir un gaz évacué au sommet du ballon contenant la majeure partie des hydrocarbures aliphatiques co-absorbés par la solution absorbante. Ce gaz peut éventuellement être lavé par une fraction de la solution absorbante régénérée et le gaz ainsi obtenu peut être utilisé comme gaz combustible. Le ballon de détente opère de préférence à une pression inférieure à celle de la colonne d'absorption C1 et supérieure à celle de la colonne de régénération C2. Cette pression est généralement fixée par les conditions d'utilisation du gaz combustible, et est typiquement de l'ordre de 5 à 15 bar. Le ballon de détente opère à une température sensiblement identique à celle de la solution absorbante obtenue en fond de la colonne d'absorption C1.

La régénération peut être effectuée à une pression dans la colonne C2 comprise entre 1 bar et 5 bar, voire jusqu'à 10 bar et à une température dans la colonne C2 comprise entre 100°C et 180°C, de préférence comprise entre 110°C et 170°C, plus préférentiellement entre 110°C et 140°C. De manière préférée, la température de régénération dans la colonne de régénération C2 est comprise entre 155°C et 180°C dans le cas où l'on souhaite réinjecter les gaz acides. De manière préférée, la température de régénération dans la colonne de régénération C2 est comprise entre 115°C et 130°C dans les cas où le gaz acide est envoyé à l'atmosphère ou dans un procédé de traitement aval, comme un procédé Claus ou un procédé de traitement de gaz de queue.

Avantageusement, le procédé selon l'invention permet de réduire les besoins énergétiques pour la régénération de la solution absorbante, dans la mesure où l'amélioration de la sélectivité diminue la quantité de CO₂ captée, la chaleur d'absorption du CO₂ étant généralement comprise entre 50 et 80 kJ/mole.

### Exemples

Dans les exemples suivants, on appelle produit selon l'invention tout composé ou mélange de composés selon l'invention.

Les exemples ci-dessous illustrent, de manière non limitative, la synthèse des composés selon l'invention (exemples 1 à 5), ainsi que certaines des performances de ces composés lorsqu'ils sont utilisés en solution aqueuse pour l'élimination sélective de l'H₂S par rapport au CO₂ contenus dans un effluent gazeux par mise en contact de l'effluent gazeux avec la solution.

### Exemple 1 : synthèse du produit A selon l'invention

A 40,0 g d'un diglycidyléther du polyéthylèneglycol de masse molaire moyenne de 400 g/mole, on fait réagir 11,0 g de pipérazine à 100°C pendant 5 heures, puis, à 50°C, on dilue le milieu avec 50,0 g d'éthanol. Après retour à la température ambiante, on introduit 7,6 g d'époxy-1,2-propane, puis on poursuit la réaction sous agitation pendant 2 heures à la température ambiante. Après évaporation sous pression réduite de l'excès d'époxy-1,2-propane et de l'éthanol, on obtient 54,0 g d'un produit très visqueux, le produit A, dont la concentration en fonctions amines est estimée à 4,7 moles/kg de produit A. La concentration en fonction amines est estimée sur la base du bilan matière.

### Exemple 2 : synthèse du produit B selon l'invention

A 40,0 g d'un diglycidyléther du polyéthylèneglycol de masse molaire moyenne de 400 g/mole, on fait réagir 9,65 g de pipérazine à 100°C pendant 5 heures, puis, à 50°C, on dilue le milieu avec 50,0g d'éthanol. Après retour à la température ambiante, on introduit 5,8 g d'époxy-1,2-propane puis on poursuit la réaction sous agitation pendant 2 heures à la température ambiante. Après évaporation sous pression réduite de l'excès d'époxy-1,2-propane et de l'éthanol, on obtient 52,0 g d'un produit très visqueux, le produit B, dont la concentration en fonction amines est estimée à 4,3 moles/kg de produit B. La concentration en fonction amines est estimée sur la base du bilan matière.

### Exemple 3 : synthèse du produit C selon l'invention

A 40,0 g d'un diglycidyléther du polyéthylèneglycol de masse molaire moyenne de 400 g/mole, on fait réagir 8,0 g de pipérazine à 100°C pendant 5 heures, puis, à 50°C, on dilue le milieu avec 50,0 g d'éthanol. Après retour à la température ambiante, on introduit 5,0 g d'époxy-1,2-propane puis on poursuit la réaction sous agitation pendant 2 heures à la température ambiante. Après évaporation sous pression réduite de l'excès d'époxy-1,2-propane et de l'éthanol, on obtient 49,3 g d'un produit très visqueux, le produit C, dont la concentration en fonction amines est estimée à 3,8 moles/kg de produit C. La concentration en fonction amines est estimée sur la base du bilan matière.

### Exemple 4 : synthèse du produit D selon l'invention

A 35,6 g d'un diglycidyléther du polyéthylèneglycol de masse molaire moyenne de 400 g/mole, on fait réagir 7,5 g de pipérazine à 100°C pendant 5 heures, puis, à 50°C, on dilue le milieu avec 50,0 g d'éthanol. Après retour à la température ambiante, on introduit 3,2 g d'époxy-1,2-propane puis on poursuit la réaction sous agitation pendant 2 heures à la température ambiante. Après évaporation sous pression réduite de l'excès d'époxy-1,2-propane et de l'éthanol, on obtient 48,2 g d'un produit très visqueux, le produit D, dont la concentration en fonction amines est estimée à 3,6 moles/kg de produit D. La concentration en fonction amines est estimée sur la base du bilan matière.

### Exemple 5 : synthèse du produit E selon l'invention

A 40,0 g d'un diglycidyléther du 1,4-butanediol dont l'indice d'époxyde est compris entre 120 et 130 g/équivalent époxyde, on fait réagir 14,4 g de pipérazine à 100°C pendant 5 heures, puis, à 50°C, on dilue le milieu avec 50,0g d'éthanol. Après retour à la température ambiante, on introduit 5,5 g d'époxy-1,2-propane puis on poursuit la réaction sous agitation pendant 2 heures à la température ambiante. Après évaporation sous pression réduite de l'excès d'époxy-1,2-propane et de l'éthanol, on obtient 53,5 g d'un produit très visqueux, le produit E, dont la concentration en fonction amines est estimée à 6,3 moles/ kg de produit E. La concentration en fonction amines est estimée sur la base du bilan matière.

### Exemple 6 : vitesse d'absorption du CO₂ d'une formulation d'amine pour un procédé d'absorption sélective

On effectue des essais comparatifs d'absorption du CO₂ par différentes solutions absorbantes :
- une solution aqueuse de N-méthyldiéthanolamine (MDEA) à 45,75 % en poids de MDEA, qui constitue une solution absorbante de référence pour une élimination sélective en traitement de gaz ;
- une solution aqueuse de MDEA à 45,75 % poids contenant 5 % poids de polyéthylèneglycol (PEG) de masse moléculaire 35 000 g/mol, qui est un composé viscosifiant décrit dans le document FR 2 996 464.
- une solution aqueuse de MDEA à 45,00 % poids contenant 10 % poids du produit B selon l'invention.
- une solution aqueuse de MDEA à 45,75 % poids contenant 5% poids du produit C selon l'invention.

Pour chaque essai, on mesure le flux d'absorption du CO₂ par la solution absorbante aqueuse dans un réacteur fermé, du type cellule de Lewis. On introduit 200 g de solution dans le réacteur fermé, régulé à une température de 45°C. On réalise quatre injections successives de CO₂ de 100 à 200 mbar dans la phase vapeur du réacteur ayant un volume de 200 cm³. La phase gaz et la phase liquide sont agitées respectivement à 100 tours/minutes et à 120 tours/minutes, et sont entièrement caractérisées du point de vue hydrodynamique. Pour chaque injection, on mesure la vitesse d'absorption du CO₂ par variation de pression dans la phase gaz. On détermine ainsi un coefficient de transfert global Kg par une moyenne des résultats obtenus sur les quatre injections.

Les résultats obtenus sont présentés dans le tableau 1 ci-dessous en vitesse d'absorption relative par rapport à la solution absorbante aqueuse de référence comprenant 45,75% poids de MDEA. La vitesse d'absorption relative est définie par le rapport du coefficient de transfert global de la solution absorbante testée sur le coefficient de transfert global de la solution absorbante de référence (avec MDEA).

La viscosité dynamique des différentes solutions d'amine à 45°C est obtenue à l'aide d'un viscosimètre automatique de type LOVIS 2000M de chez Anton Paar, fonctionnant selon le principe du viscosimètre d'Hoepler. La viscosité est déduite de la mesure du temps de chute d'une bille en acier dans un capillaire de diamètre 1,59 mm (plage principale de 1 à 20 mPa.s, plage étendue de 0,3 à 90 mPa.s) incliné à divers angles conformément aux normes DIN 53015 et ISO 12058, ainsi que la mesure de densité des solutions d'amines obtenues sur un densimètre Anton Paar DMA 4100 à 45°C.

**Tableau 1**

| Formulation | Concentration en amine (%poids) | Concentration en fonctions amine (mol/kg) | Viscosité à 45°C (mPas) | Vitesse d'absorption relative du CO₂ à 45°C |
|---|---|---|---|---|
| MDEA 45,75 % poids (référence) | 45,75 | 3,84 | 3,5 | 1,0 |
| MDEA 45,75 % poids avec 5 % poids de PEG 35000 (selon le document FR2996464) | 45,75 | 3,84 | 17.9 | 0,73 |
| MDEA 45% poids avec 10 % poids de produit B (selon l'invention) | 55,0 | 4,21 | 13,8 | 0,58 |
| MDEA 45,75 % poids avec 5 % poids de produit C (selon l'invention) | 50,75 | 4,03 | 9,9 | 0,69 |

L'examen des résultats fait ressortir pour la formulation selon l'invention une vitesse d'absorption du CO₂ plus lente que la formulation de référence.

On constate également que l'ajout du produit B ou respectivement du produit C à une solution de MDEA, respectivement à 45,0 % poids et 45,75 % poids de MDEA, diminue la cinétique d'absorption du CO₂ de 42 %, respectivement 31%, contre 27% avec l'ajout de PEG 35 000 à 5 % poids selon l'enseignement de l'art antérieur. Ce résultat est d'autant plus surprenant que dans le cas de la formulation selon l'art antérieur, la viscosité est plus élevée et la concentration en fonctions amines est plus faible que dans la formulation selon l'invention.

Il apparaît donc que les produits B et C exemplifiés selon l'invention présentent étonnamment un intérêt particulier et amélioré dans le cas d'une désacidification sélective d'un effluent gazeux dans laquelle on cherche à limiter la cinétique d'absorption du CO₂.

### Exemple 7 : capacité d'absorption de l'H₂S de formulations de MDEA et du produit C pour un procédé de traitement de gaz acides.

Les performances de capacité d'absorption de l'H₂S à 40°C d'une solution aqueuse de MDEA et de produit A selon l'invention, contenant 45,75 % poids de MDEA et 5 % poids de produit C, est comparée à celles d'une solution aqueuse de MDEA contenant 50 % poids de MDEA qui constitue une solution absorbante de référence pour la désacidification de gaz contenant de l'H₂S.

On réalise un test d'absorption à 40 °C sur les solutions aqueuses d'amine au sein d'une cellule d'équilibre thermostatée. Ce test consiste à injecter dans la cellule d'équilibre, préalablement remplie de solution aqueuse d'amine dégazée, une quantité connue de gaz acide, de l'H₂S dans cet exemple, puis à attendre l'établissement de l'état d'équilibre. Les quantités de gaz acide absorbées dans la solution aqueuse d'amine sont alors déduites des mesures de température et de pression grâce à des bilans de matière et de volume. Les solubilités sont représentées de manière classique sous la forme des pressions partielles en H₂S (en bar) en fonction du taux de charge en H₂S (en mol d'H₂S/kg de solution absorbante et en mol d'H₂S/mol de MDEA).

Dans le cas d'une désacidification en traitement de gaz naturel, les pressions partielles en H₂S rencontrées dans les gaz acides sont typiquement comprises entre 0,1 et 1 bar, à une température de 40 °C. A titre d'exemple, dans cette gamme industrielle, on compare dans le tableau 2 ci-dessous les taux de charge d'H₂S obtenus à 40°C pour différentes pressions partielles en H₂S entre la solution absorbante de MDEA à 50 % poids et la solution absorbante selon l'invention.

**Tableau 2**

| Formulation | MDEA 50 %poids (référence) | | MDEA 45,75%poids avec 5%poids de produit C selon l'invention | |
|---|---|---|---|---|
| Pression partielle en H₂S (bar) | Taux de charge en H₂S (mol/mol de MDEA) | Taux de charge en H₂S (mol/kg) | Taux de charge en H₂S (mol/mol de MDEA) | Taux de charge en H₂S (mol/kg) |
| 0,1 | 0,21 | 0,88 | 0,23 | 0,90 |
| 0,3 | 0,40 | 1,71 | 0,47 | 1,80 |
| 1 | 0,69 | 2,91 | 0,76 | 2,90 |

A 40 °C, pour des pressions partielles en H₂S inférieures ou égales à 1 bar, la capacité d'absorption de la solution aqueuse de MDEA et de produit A selon l'invention est équivalente ou supérieure à celle de la solution de MDEA de référence.

On constate donc que la solution absorbante selon l'invention a une capacité d'absorption de l'H₂S équivalente ou plus élevée que la solution aqueuse de MDEA de référence, dans la gamme de pressions partielles en H₂S comprise entre 0,1 et 1 bar, correspondant à une gamme de pression partielle représentative des conditions industrielles usuelles.

Comme illustré dans l'exemple précédent, l'absorption du CO₂ est plus lente dans la solution aqueuse selon l'invention que dans une solution aqueuse de MDEA de référence. De plus, la capacité d'absorption en H₂S des solutions absorbantes selon l'invention par rapport aux solutions de MDEA de référence est équivalente ou supérieure pour une pression partielle en H₂S de 0,1 - 1 bar, comme illustré dans le présent exemple. Il apparaît donc que le produit exemplifié selon l'invention est particulièrement intéressant pour améliorer la sélectivité d'absorption de H₂S par rapport au CO₂ et pour réduire les débits de solution absorbante à mettre en œuvre sur des applications de désacidification sélective (H₂S par rapport au CO₂), c'est-à-dire absorber un débit donné d'H₂S tout en réduisant le débit de CO₂ co-absorbé par rapport à la solution absorbante de MDEA de référence.

## Revendications

1. Composé azoté appartenant à la famille des polyamines, issu de la réaction entre un diglycidyléther de polyol et la pipérazine, et répondant à la formule générale (I) suivante : 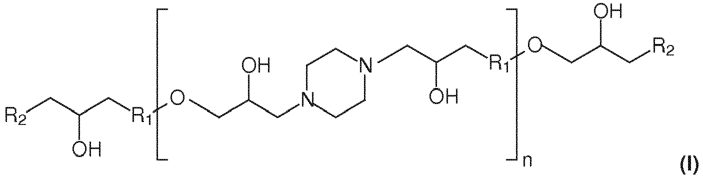 dans laquelle :
- n est un entier compris entre 0 et 30,
- le radical R₁ est choisi parmi les groupes de sous-formules **(g₁)** à (**g₄**) suivants :
• le groupe de formule **(g₁)** : 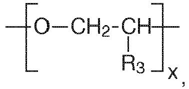 où :
-- x est un entier compris entre 1 et 100, de préférence entre 1 et 25,
-- le radical R₃ est indifféremment un atome d'hydrogène, un radical alkyle ou un radical hydroxyalkyle, comportant entre 1 et 4 atomes de carbone,
• le groupe de formule (**g₂**) : 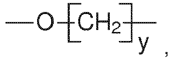 où y est un entier compris entre 3 et 8,
• le groupe de formule (**g₃**) : 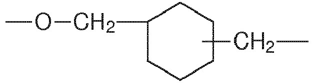
• le groupe de formule (**g₄**) : 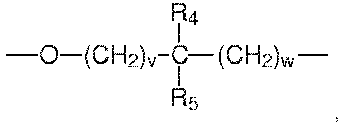 où :
-- v et w sont des entiers, chacun compris entre 1 et 4, avec la condition selon laquelle la somme de v et w est égale à 2, 3, 4 ou 5,
-- le radical R₄ est indifféremment un groupe hydroxyle, un radical alkyle ou un radical hydroxyalkyle, comportant entre 1 et 4 atomes de carbone, et
-- le radical R₅ est indifféremment un atome d'hydrogène ou un groupe hydroxyméthyle (-CH₂OH).
- le radical R₂ est de formule (**g₅**) suivante : 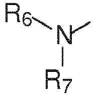 dans laquelle :
-- le radical R₆ est indifféremment un atome d'hydrogène, un radical alkyle ou un radical hydroxyalkyle, comportant entre 1 et 6 atomes de carbone,
-- le radical R₇ est indifféremment un radical alkyle ou un radical hydroxyalkyle, comportant entre 1 et 6 atomes de carbone,
-- les radicaux R₆ et R₇ peuvent être reliés entre eux par une liaison covalente ou par un hétéroatome pour former un hétérocycle à 5, 6, 7 ou 8 atomes lorsque le radical R₆ n'est pas un atome d'hydrogène,
et dans laquelle lorsque n est égal à 0, les radicaux R₆ et R₇ sont reliés entre eux pour former un cycle pipérazine, le radical R₂ répondant à la formule **(g₆)** ci-dessous : 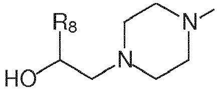 où le radical R₈ est indifféremment un atome d'hydrogène, un radical alkyle ou un radical hydroxyalkyle, comportant entre 1 et 4 atomes de carbone.

2. Composé selon la revendication 1, dans lequel les radicaux R₆ et R₇ sont reliés entre eux par une liaison covalente ou par un hétéroatome pour former un hétérocycle à 5, 6, 7 ou 8 atomes lorsque le radical R₆ n'est pas un atome d'hydrogène.

3. Composé selon la revendication 2, dans lequel l'hétérocycle est un cycle pipérazine.

4. Composé selon la revendication 3, dans lequel le radical R₂ répond à la formule **(g₆).**

5. Procédé de synthèse d'un composé azoté selon l'une des revendications 1 à 4, comprenant les réactions suivantes :
- une première réaction d'addition ou de polyaddition d'un diglycidyléther d'un polyol de formule **(IV)** avec de la pipérazine de formule **(V)** pour former un composé intermédiaire de formule (**VI**), 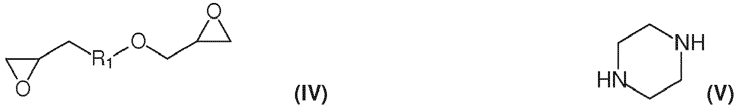 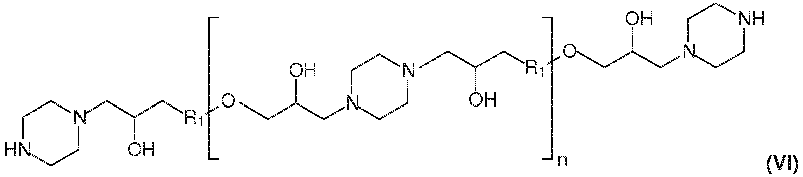 R₁ étant défini comme dans la formule générale **(I),**
ladite pipérazine étant en excès molaire par rapport audit diglycidyléther d'un polyol,
- une deuxième réaction d'addition dudit composé intermédiaire de formule **(VI)** avec monoépoxyde de formule générale **(VII)** 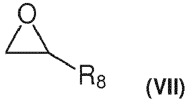 pour produire au moins un composé azoté selon l'une des revendications 1 à 4.

6. Procédé de synthèse d'un composé azoté selon l'une des revendications 1 à 4, comprenant les réactions suivantes :
- une première réaction d'addition ou de polyaddition d'un diglycidyléther d'un polyol de formule **(IV)** avec de la pipérazine de formule (V) pour former un composé intermédiaire de formule (**VI**), 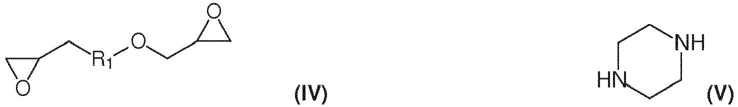 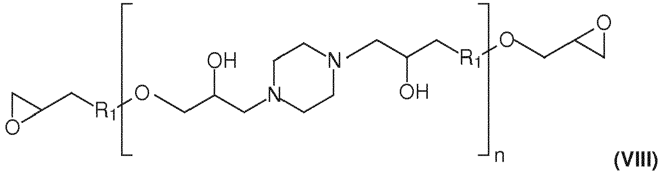 R₁ étant défini comme dans la formule générale **(I),**
ledit diglycidyléther d'un polyol étant en excès molaire par rapport à ladite pipérazine,
- une deuxième réaction d'addition dudit composé intermédiaire de formule **(VIII)** avec une amine de formule générale **(IX)** 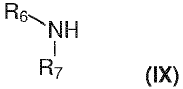 les radicaux R₆ et R₇ étant définis comme dans la formule générale **(I),**
pour produire au moins un composé azoté selon l'une des revendications 1 à 4.

7. Procédé de synthèse selon l'une quelconque des revendications 5 ou 6, dans lequel la première réaction et la deuxième réaction sont conduites en deux étapes successives.

8. Procédé de synthèse selon l'une quelconque des revendications 5 ou 6, dans lequel la première réaction et la deuxième réaction sont réalisées en une étape.

9. Procédé de synthèse selon l'une des revendications 5 à 8, dans lequel le diglycidyléther d'un polyol de formule **(IV)** de la première réaction est choisi dans la liste constituée par :
- le diglycidyléther de l'éthylèneglycol ;
- le diglycidyléther du diéthylèneglycol ;
- le diglycidyléther du triéthylèneglycol ;
- le diglycidyléther de polyéthylèneglycol de masse molaire comprise entre 200 et 2000 g/mole ;
- le diglycidyléther de copolymères de l'éthylèneglycol et du propylèneglycol de masse molaire comprise entre 200 et 2000 g/mole ;
- le diglycidyléther du 1,3-propanediol ;
- le diglycidyléther du 1,4-butanediol ;
- le diglycidyléther du 1,5-pentanediol
- le diglycidyléther du 1,6-hexanediol ;
- le diglycidyléther du 1,8-octanediol ;
- le diglycidyléther du néopentylglycol ;
- le diglycidyléther du 1,4-cyclohexanediméthanol ;
- le diglycidyléther du 1,3-cyclohexanediméthanol ;
- le diglycidyléther du 1,2-cyclohexanediméthanol ;
- les diglycydyléthers du glycérol ;
- les diglycidyléthers du triméthyloléthane ;
- les diglycidyléthers du triméthylolpropane ;
- les diglycidyléthers du pentaérythritol.

10. Procédé de synthèse selon l'une des revendications 6 à 9, dans lequel l'amine secondaire de formule **(IX)** est choisie indifféremment dans le groupe constitué par :
- la diméthylamine ;
- la diéthylamine ;
- le 2-amino-2-méthyl-1-propanol ;
- la la tris(hydroxyméthyl)aminométhane ;
- la morpholine ;
- la N-méthylpipérazine ;
- la N-hydroxyéthylpipérazine ;
- la N-2-hydroxypropylpipérazine ;
- la diéthanolamine ;
- le N-méthylaminoéthanol.

11. Procédé de synthèse selon l'une des revendications 5 ou 7 à 9, dans lequel le monoépoxyde de formule **(VII)** est choisi indifféremment dans le groupe constitué par :
- l'époxy-1,2-éthane ;
- l'époxy-1,2-propane ;
- l'époxy-1,2-butane ;
- le glycidol.

12. Procédé d'élimination sélective de l'H₂S par rapport au CO₂ d'un effluent gazeux comportant de l'H₂S et du CO₂, dans lequel on effectue une étape d'absorption des composés acides par mise en contact de l'effluent gazeux avec une solution absorbante comportant :
(a) de l'eau,
(b) au moins un composé azoté principal comprenant au moins une fonction amine tertiaire ou une fonction amine secondaire comprenant deux carbones secondaires en position α et α' de l'atome d'azote ou au moins un carbone tertiaire en alpha ou en béta de l'atome d'azote, et
(c) au moins un composé azoté annexe selon l'une des revendications 1 à 4, ou susceptible d'être obtenu par un procédé de synthèse selon l'une des revendications 5 à 11.

13. Procédé selon la revendication 12, dans lequel la solution absorbante comporte :
- une fraction massique d'eau comprise entre 3,5 % et 94,5 % poids de la solution absorbante, de préférence entre 39,5 % et 79,5 % poids,
- une fraction massique du composé azoté principal comprise entre 5 % et 95 % en poids de la solution absorbante, de préférence entre 20 et 60 % poids,
- une fraction massique du composé azoté annexe comprise entre 0,5 % et 25 % poids de la solution absorbante, de préférence entre 1 % et 10 % poids,
la fraction massique du composé azoté principal étant supérieure à celle de la composé azoté annexe.

14. Procédé selon l'une des revendications 12 et 13, dans lequel le composé azoté principal est choisi dans le groupe constitué par :
- la N-méthyldiéthanolamine ;
- la triéthanolamine ;
- la diéthylmonoéthanolamine ;
- la diméthylmonoéthanolamine ;
- l'éthyldiéthanolamine ;
- les monoalcanolamines tertiaires de la famille des 3-alcoxypropylamines de la liste constituée par la N-méthyl-N-(3-méthoxypropyl)-2-aminoéthanol, la N-méthyl-N-(3-méthoxypropyl)-1-amino-2-propanol, la N-méthyl-N-(3-méthoxypropyl)-1-amino-2-butanol, la N-éthyl-N-(3-méthoxypropyl)-2-aminoéthanol, la N-éthyl-N-(3-méthoxypropyl)-1-amino-2-propanol, la N-éthyl-N-(3-méthoxypropyl)-1-amino-2-butanol, la N-isopropyl-N-(3-méthoxypropyl)-2-aminoéthanol, la N-isopropyl-N-(3-méthoxypropyl)-1-amino-2-propanol, et la N-isopropyl-N-(3-méthoxypropyl)-1-amino-2-butanol ;
- les diamines de la liste constituée par la 1,2-bis(2-diméthylaminoéthoxy)éthane, la 1,2-bis(2-diéthylaminoéthoxy)éthane et la 1,2-bis(2-pyrolidinoéthoxy)éthane ;
- les diamines de la famille du 1,3-diamino-2-propanol de la liste constituée par le 1,3-Bis(diméthylamino)-2-propanol, le (1-diméthylamino-3-ter-butylamino)-2-propanol, le 1,3 Bis(ter-butylamino)-2-propanol, le 1,3-bis(diéthylamino)-2-propanol, le 1,3-bis(méthylamino)-2-propanol, le 1,3-bis(éthylméthylamino)-2-propanol, le 1,3 bis(n-propylamino)-2-propanol, le 1,3-bis(isopropylamino)-2-propanol, le 1,3 bis(n-butylamino)-2-propanol, le 1,3-bis(isobutylamino)-2-propanol, le 1,3-bis(pipéridino)-2-propanol, et le 1,3-bis(pyrrolidino)-2-propanol, le N,N,N'-triméthyl-N'-hydroxyéthyl-1,3-diamino-2-propanol ;
- les dihydroxyalkylamines de la liste constituée par le N-(2'-hydroxyéthyl)-2-amino-2-méthyl-1-propanol, le N-(2'-hydroxypropyl)-2-amino-2-méthyl-1-propanol, le N-(2'-hydroxybutyl)-2-amino-2-méthyl-1-propanol, le (N-méthyl-N-hydroxyéthyl)-3-amino-2-butanol ;
- les diamines de la famille des bis(amino-3-propyl)ether ou des (amino-2-éthyl)-(amino-3-propyl)éthers de la liste constituée par le bis(diméthylamino-3-propyl)éther, bis(diéthylamino-3-propyl)-éther, le (diméthylamino-2-éthyl)-(diméthylamino-3-propyl)-éther, le (diéthylamino-2-éthyl)-(diméthylamino-3-propyl)-éther, le (diméthylamino-2-éthyl)-(diéthylamino-3-propyl)-éther, le (diéthylamino-2-éthyl)-(diéthylamino-3-propyl)-éther ;
- les diamines tertiaires béta-hydroxylées de la liste constituée par le 1-diméthylamino-3-(2-diméthylaminoéthoxy)-2-propanol, le 1,1'-oxybis[3-(diméthylamino)-2-propanol], le N,N,N',N'-(tétraméthyl)-1,6-diamino-2,5-hexanediol, le N,N,N',N'-(tétraméthyl)-1,7-diamino-2,6-heptanediol, le N,N,N',N'-(tétraméthyl)-1,8-diamino-2,7-octanediol, le N,N,N',N'-(tétraméthyl)-1,9-diamino-2,8-nonanediol, le N,N,N',N'-(tétraméthyl)-1,10-diamino-2,9-décanediol ;
- les di-(2-hydroxyalkyl)-monoamines de la liste constituée par le 1-[(2-hydroxyéthyl)méthylamino]-2-méthyl-2-propanol, le 1,1'-(méthylimino)-bis-[2-méthyl-2-propanol], le 2-[(2-hydroxy-2-méthylpropyl)amino]-2-méthyl-1-propanol, le 2-[(2-hydroxy-2-méthylpropyl)amino]-1-butanol, le Bis(2-hydroxy-2méthylpropyl)amine ;
- les 4-(aminoéthyl)-morpholines tertiaires encombrées de la liste constituée par le 1-(4-morpholino)-2-(méthylisopropylamino)-éthane, le 1-(4-morpholino)-2-(méthyltertiobutylamino)-éthane, le 1-(4-morpholino)-2-(diisopropylamino)-éthane, le 1-(4-morpholino)-2-(1-pipéridinyl)-éthane ;
- les diamines de la liste constituée par la (N-morpholinoéthyl) isopropylamine, la (N-pipéridinoéthyl) isopropylamine, (N-morpholinoéthyl) tertiobutylamine ;
- les amines de la famille des N-alkyl-3-hydroxypipéridines et N-alkyl-4-hydroxypipéridines de la liste constituée par la N-méthyl-4-hydroxy-pipéridine, la N-éthyl-3-hydroxypipéridine, la N-méthyl-3- hydroxy-pipéridine ;
- les alkylaminopipérazines que sont la 1-méthyl-4-(3-diméthylaminopropyl)-pipérazine, la 1-éthyl-4-(diéthylaminoéthyl)-pipérazine.

15. Procédé selon l'une des revendications 12 à 14, dans lequel la solution absorbante comporte en outre un solvant physique choisi dans le groupe constitué par le méthanol, l'éthanol, le 2-éthoxyéthanol, l'alcool benzylique, le triéthylèneglycoldiméthyléther, le tétraéthylèneglycoldiméthyléther, le pentaéthylèneglycoldiméthyléther, l'hexaéthylèneglycoldiméthyléther, l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, et le tributylphosphate, le carbonate de propylène.

16. Procédé selon l'une des revendications 12 à 15, dans lequel l'effluent gazeux choisi est parmi le gaz naturel, les gaz de synthèse, les gaz de raffinerie, les gaz acides issus d'une unité aux amines, les gaz issus d'une unité de réduction en queue du procédé Claus, les gaz de fermentation de biomasse.

## Patentansprüche

1. Stickstoffhaltige Verbindung der Polyaminfamilie, erhalten aus der Umsetzung von Polyoldiglycidylether mit Piperazin, mit der folgenden allgemeinen Formel **(I)**: 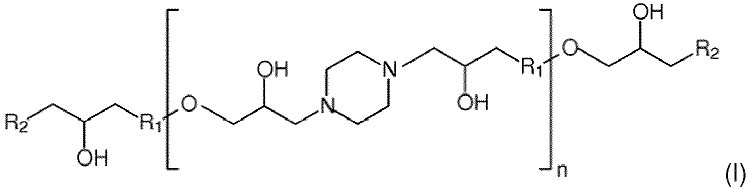 worin:
- n eine ganze Zahl im Bereich zwischen 0 und 30 ist,
- der Rest R₁ ausgewählt ist aus den Gruppen mit den folgenden Unterformeln (**g₁** bis (**g₄**):
• der Gruppe mit der Formel (**g₁**): 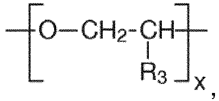 worin:
-- x eine ganze Zahl im Bereich zwischen 1 und 100, vorzugsweise zwischen 1 und 25 ist,
-- der Rest R₃ unabhängig entweder ein Wasserstoffatom, ein Alkylrest oder ein Hydroxyalkylrest ist, der zwischen 1 und 4 Kohlenstoffatome umfasst,
• der Gruppe mit der Formel (**g₂**): 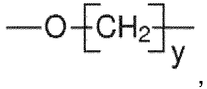 worin y eine ganze Zahl im Bereich zwischen 3 und 8 ist,
• der Gruppe mit der Formel (**g₃**): 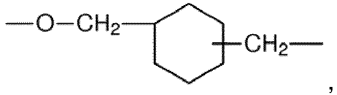
• der Gruppe mit der Formel (**g₄**): 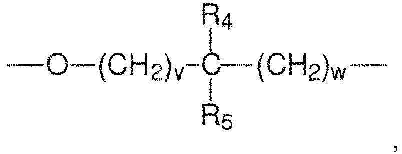 worin:
-- v und w ganze Zahlen, jeweils im Bereich zwischen 1 und 4 sind, unter der Bedingung, dass die Summe von v und w gleich 2, 3, 4 oder 5 ist,
-- der Rest R₄ unabhängig entweder eine Hydroxylgruppe, ein Alkylrest oder ein Hydroxyalkylrest ist, der zwischen 1 und 4 Kohlenstoffatome umfasst, und
-- der Rest R₅ unabhängig entweder ein Wasserstoffatom oder eine Hydroxymethylgruppe (CH₂OH) ist,
- der Rest R₂ die folgende Formel (**g₅**) aufweist: 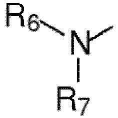 worin:
-- der Rest R₆ unabhängig entweder ein Wasserstoffatom, ein Alkylrest oder ein Hydroxyalkylrest ist, der zwischen 1 und 6 Kohlenstoffatome umfasst,
-- der Rest R₇ unabhängig entweder ein Alkylrest oder ein Hydroxyalkylrest ist, der zwischen 1 und 6 Kohlenstoffatome umfasst,
-- die Reste R₆ und R₇ über eine kovalente Bindung oder über ein Heteroatom miteinander verbunden sein können, um einen Heterocyclus mit 5, 6, 7 oder 8 Atomen zu bilden, wenn der Rest R₆ kein Wasserstoffatom ist,
und worin, wenn n gleich 0 ist, die Reste R₆ und R₇ miteinander verbunden sind, um einen Piperazincyclus zu bilden, wobei der Rest R₂ die folgende Formel (**g₆**) aufweist: 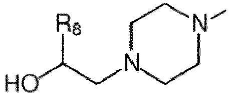 worin der Rest R₈ unabhängig entweder ein Wasserstoffatom, ein Alkylrest oder ein Hydroxyalkylrest ist, der zwischen 1 und 4 Kohlenstoffatome umfasst.

2. Verbindung nach Anspruch 1, worin die Reste R₆ und R₇ über eine kovalente Bindung oder über ein Heteroatom miteinander verbunden sind, um einen Heterocyclus mit 5, 6, 7 oder 8 Atomen zu bilden, wenn der Rest R₆ kein Wasserstoffatom ist.

3. Verbindung nach Anspruch 2, worin der Heterocyclus ein Piperazincyclus ist.

4. Verbindung nach Anspruch 3, worin der Rest R₂ die Formel **(g₆)** aufweist.

5. Verfahren zur Synthese einer stickstoffhaltigen Verbindung nach einem der Ansprüche 1 bis 4, umfassend die folgenden Reaktionen:
- eine erste Reaktion zur Addition oder Polyaddition eines Polyoldiglycidylethers der Formel (**IV**) mit Piperazin der Formel (**V**), um eine Zwischenverbindung mit der Formel (**VI**) zu bilden, 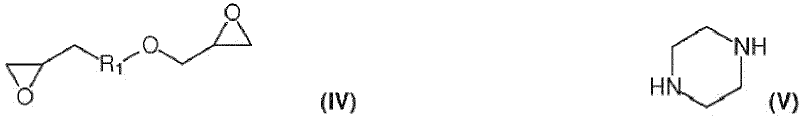 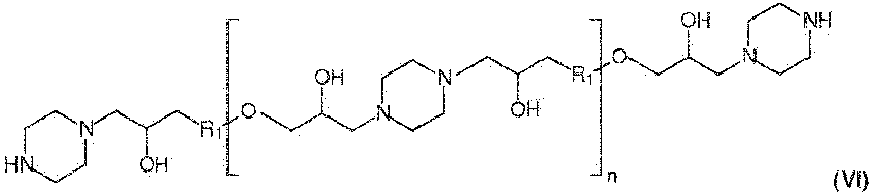 wobei R₁ definiert ist wie in der allgemeinen Formel **(I),**
wobei das Piperazin in Bezug auf den Polyoldiglycidylether im molaren Überschuss vorliegt,
- eine zweite Reaktion zur Addition der Zwischenverbindung der Formel **(VI)** mit Monoepoxid der allgemeinen Formel **(VII)** 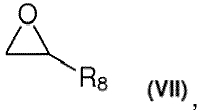 um mindestens eine stickstoffhaltige Verbindung nach einem der Ansprüche 1 bis 4 zu produzieren.

6. Verfahren zur Synthese einer stickstoffhaltigen Verbindung nach einem der Ansprüche 1 bis 4, das die folgenden Reaktionen umfasst:
- eine erste Reaktion zur Addition oder Polyaddition eines Polyoldiglycidylethers der Formel (**IV**) mit Piperazin der Formel (**V**), um eine Zwischenverbindung mit der Formel (**VI**) zu bilden, 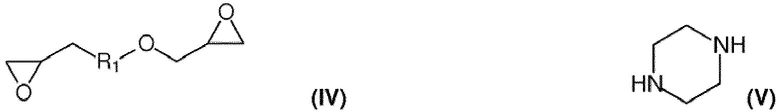 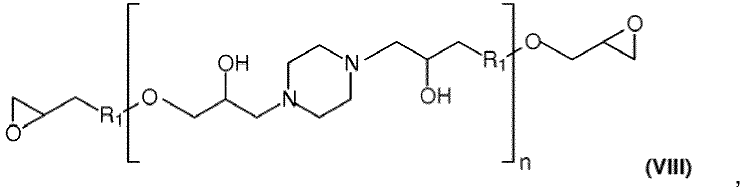 wobei R₁ definiert ist wie in der allgemeinen Formel **(I),**
wobei der Polyoldiglycidylether in Bezug auf das Piperazin in einem molaren Überschuss vorliegt,
- eine zweite Reaktion zur Addition der Zwischenverbindung der Formel (**VIII**) mit einem Amin der allgemeinen Formel (**IX**) 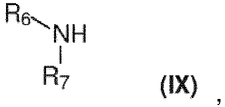 wobei die Reste R₆ und R₇ definiert sind wie in der allgemeinen Formel **(I),**
um mindestens eine stickstoffhaltige Verbindung nach einem der Ansprüche 1 bis 4 zu produzieren.

7. Syntheseverfahren nach einem der Ansprüche 5 oder 6, worin die erste Reaktion und die zweite Reaktion in zwei aufeinanderfolgenden Schritten durchgeführt werden.

8. Syntheseverfahren nach einem der Ansprüche 5 oder 6, worin die erste Reaktion und die zweite Reaktion in einem Schritt durchgeführt werden.

9. Syntheseverfahren nach einem der Ansprüche 5 bis 8, worin der Polyoldiglycidylether mit der Formel (**IV**) der ersten Reaktion ausgewählt ist aus der Liste bestehend aus:
- Ethylenglykoldiglycidylether;
- Diethylenglykoldiglycidylether;
- Triethylenglykoldiglycidylether;
- Polyethylenglykoldiglycidylether mit einer Molmasse im Bereich zwischen 200 und 2.000 g/Mol;
- Diglycidylether aus Copolymeren von Ethylenglykol und Propylenglykol mit einer Molmasse im Bereich zwischen 200 und 2.000 g/Mol;
- 1,3-Propandioldiglycidylether;
- 1,4-Butandioldiglycidylether;
- 1,5-Pentandioldiglycidylether;
- 1,6-Hexandioldiglycidylether;
- 1,8-Octandioldiglycidylether;
- Neopentylglykoldiglycidylether;
- 1,4-Cyclohexandimethanoldiglycidylether;
- 1,3-Cyclohexandimethanoldiglycidylether;
- 1,2-Cyclohexandimethanoldiglycidylether;
- Glycerindiglycidylether;
- Trimethylolethandiglycidylether;
- Trimethylolpropandiglycidylether;
- Pentaerythritdiglycidylether.

10. Syntheseverfahren nach einem der Ansprüche 6 bis 9, worin das sekundäre Amin mit der Formel (**IX**) unabhängig ausgewählt ist aus der Gruppe bestehend aus:
- Dimethylamin;
- Diethylamin;
- 2-Amino-2-methyl-1-propanol;
- Tris(hydroxymethyl)-aminomethan;
- Morpholin;
- N-Methylpiperazin;
- N-Hydroxyethylpiperazin;
- N-2-Hydroxypropylpiperazin;
- Diethanolamin;
- N-Methylaminoethanol.

11. Syntheseverfahren nach einem der Ansprüche 5 oder 7, worin das Monoepoxid mit der Formel (**VII**) unabhängig ausgewählt ist aus der Gruppe bestehend aus:
- 1,2-Epoxyethan;
- 1,2-Epoxypropan;
- 1,2-Epoxybutan;
- Glycidol.

12. Verfahren zum selektiven Entfernen von H₂S gegenüber CO₂ aus einem gasförmigen Abstrom, der H₂S und CO₂ umfasst, worin ein Absorptionsschritt für die Säureverbindungen durch Inkontaktbringen des gasförmigen Abstroms mit einer absorbierenden Lösung durchgeführt wird, umfassend:
(a) Wasser,
(b) mindestens eine stickstoffhaltige Hauptverbindung, umfassend mindestens eine tertiäre Aminfunktion oder eine sekundäre Aminfunktion, umfassend zwei sekundäre Kohlenstoffatome in der α- und α'-Position des Stickstoffatoms oder mindestens einen tertiären Kohlenstoff in der alpha- oder beta-Position des Stickstoffatoms und
(c) mindestens eine stickstoffhaltige Hilfsverbindung nach einem der Ansprüche 1 bis 4 oder erhältlich durch ein Syntheseverfahren nach einem der Ansprüche 5 bis 11.

13. Verfahren nach Anspruch 12, wobei die Absorptionslösung umfasst:
- einen Gewichtsanteil an Wasser im Bereich zwischen 3,5 Gew.-% und 94,5 Gew.-%, vorzugsweise im Bereich zwischen 39,5 Gew.-% und 79,5 Gew.-%, der Absorptionslösung,
- einen Gewichtsanteil der stickstoffhaltigen Hauptverbindung im Bereich zwischen 5 Gew.-% und 95 Gew.-%, vorzugsweise zwischen 20 und 60 Gew.-%, der Absorptionslösung,
- einen Gewichtsanteil der stickstoffhaltigen Hilfsverbindung im Bereich zwischen 0,5 Gew.-% und 25 Gew.-%, vorzugsweise zwischen 1 Gew.-% und 10 Gew.-%, der Absorptionslösung, wobei der Gewichtsanteil der stickstoffhaltigen Hauptverbindung höher ist als der der stickstoffhaltigen Hilfsverbindung.

14. Verfahren nach einem der Ansprüche 12 und 13, worin die stickstoffhaltige Hauptverbindung ausgewählt ist aus der Gruppe bestehend aus:
- N-Methyldiethanolamin;
- Triethanolamin;
- Diethylmonoethanolamin;
- Dimethylmonoethanolamin;
- Ethyldiethanolamin;
- tertiären Monoalkanolaminen der Familie der 3-Alkoxypropylamine aus der Liste bestehend aus N-Methyl-N-(3-methoxypropyl)-2-aminoethanol, N-Methyl-N-(3-methoxypropyl)-1-amino-2-propanol, N-Methyl-N-(3-methoxypropyl)-1-amino-2-butanol, N-Ethyl-N-(3-methoxypropyl)-2-aminoethanol, N-Ethyl-N-(3-methoxypropyl)-1-amino-2-propanol, N-Ethyl-N-(3-methoxypropyl)-1-amino-2-butanol, N-Isopropyl-N-(3-methoxypropyl)-2-aminoethanol, N-Isopropyl-N-(3-methoxypropyl)-1-amino-2-propanol und N-Isopropyl-N-(3-methoxypropyl)-1-amino-2-butanol;
- Diaminen aus der Liste bestehend aus 1,2-Bis(2-dimethylaminoethoxy)-ethan, 1,2-Bis(2-diethylaminoethoxy)-ethan und 1,2-Bis(2-pyrolidinoethoxy)-ethan;
- Diaminen der 1,3-Diamino-2-propanol-Familie aus der Liste bestehend aus 1,3-Bis(dimethylamino)-2-propanol, (1-Dimethylamino-3-ter-butylamino)-2-propanol, 1,3 Bis(ter-butylamino)-2-propanol, 1,3-Bis(diethylamino)-2-propanol, 1,3-Bis(methylamino)-2-propanol, 1,3-Bis(ethylmethylamino)-2-propanol, 1,3-Bis(n-propylamino)-2-propanol, 1,3-Bis(isopropylamino)-2-propanol, 1,3-Bis(n-butylamino)-2-propanol, 1,3-Bis(isobutylamino)-2-propanol, 1,3-Bis(piperidino)-2-propanol und 1,3-Bis(pyrrolidino)-2-propanol, N, N, N'-trimethyl-N'-hydroxyethyl-1,3-diamino-2-propanol;
- Dihydroxyalkylaminen aus der Liste bestehend aus N-(2'-Hydroxyethyl)-2-amino-2-methyl-1-propanol, N-(2'-Hydroxypropyl)-2-amino-2-methyl-1-propanol, N-(2'-Hydroxybutyl)-2-amino-2-methyl-1-propanol, (N-Methyl-N-hydroxyethyl)-3-amino-2-butanol;
- Diaminen der Familie der Bis(amino-3-propyl)-ether oder der (Amino-2-ethyl)-(amino-3-propyl)-ether der Liste bestehend aus Bis(dimethylamino-3-propyl)-ether, Bis(diethylamino-3-propyl)-ether, (Dimethylamino-2-ethyl)-(dimethylamino-3-propyl)-ether, (Diethylamino-2-ethyl)-(dimethylamino-3-propyl)-ether, (Dimethylamino-2-ethyl)-(diethylamino-3-propyl)-ether, (Diethylamino-2-ethyl)-(diethylamino-3-propyl)-ether;
- beta-hydroxylierten tertiären Diaminen aus der Liste bestehend aus 1-Dimethylamino-3-(2-dimethylaminoethoxy)-2-propanol, 1,1'-Oxybis[3-(dimethylamino)-2-propanol], N,N,N',N'-(Tetramethyl)-1,6-diamino-2,5-hexandiol, N,N,N',N'-(Tetramethyl)-1,7-diamino-2,6-heptandiol, N,N,N',N'-(Tetramethyl)-1,8-diamino-2,7-octandiol, N,N,N',N'-(Tetramethyl)-1,9-diamino-2,8-nonandiol, N,N,N',N'-(Tetramethyl)-1,10-diamino-2,9-decaediol;
- Di-(2-hydroxyalkyl)-monoaminen aus der Liste bestehend aus 1-[(2-Hydroxyethyl)-methylamino]-2-methyl-2-propanol, 1,1'-(Metylimino)-bis-[2-metyl-2-propanol], 2-[(2-Hydroxy-2-methylpropyl)amino]-2-methyl-1-propanol, 2-[(2-Hydroxy-2-methylpropyl)-amino]-1-butanol, Bis(2-hydroxy-2-methylpropyl)-amin;
- gehinderten tertiären 4-(Aminoethyl)-morpholinen aus der Liste bestehend aus 1-(4-Morpholino)-2-(methylisopropylamino)-ethan, 1-(4-Morpholino)-2-(methyltertiobutylamino)-ethan, 1-(4-Morpholino)-2-(diisopropylamino)-ethan, 1-(4-Morpholino)-2-(1-piperidinyl)-ethan;
- Diaminen aus der Liste bestehend aus (N-Morpholinoethyl)-isopropylamin, (N-Piperidinoethyl)-isopropylamin, (N-Morpholinoethyl)-tertiobutylamin;
- Aminen aus der Familie der N-Alkyl-3-hydroxypiperidine und N-Alkyl-4-hydroxypiperidine der Liste bestehend aus N-Methyl-4-hydroxy-piperidin, N-Ethyl-3-hydroxypiperidin, N-Methyl-3-hydroxy-piperidin;
- Alkylaminopiperazinen, nämlich 1-Methyl-4-(3-dimethylaminopropyl)-piperazin, 1-Ethyl-4-(diethylaminoethyl)-piperazin.

15. Verfahren nach einem der Ansprüche 12 bis 14, worin die Absorptionslösung ferner ein physikalisches Lösungsmittel enthält, ausgewählt aus der Gruppe bestehend aus Methanol, Ethanol, 2-Ethoxyethanol, Benzylalkohol, Triethylenglykoldimethylether, Tetraethylenglykoldimethylether, Pentaethylenglykoldimethylether, Hexaethylenglykoldimethylether, Heptaethylenglykoldimethylether, Octaethylenglykoldimethylether, Diethylenglykolbutoxyacetat, Glyceroltriacetat, Sulfolan, N-Methylpyrrolidon, N-Methylmorpholin-3-on, N,N-Dimethylformamid, N-Formylmorpholin, N,N-Dimethylimidazolidi-2-on, N-Methylimidazol, Ethylenglykol, Diethylenglykol, Triethylenglykol, Thiodiglykol und Tributylphosphat, Propylencarbonat.

16. Verfahren nach einem der Ansprüche 12 bis 15, worin der gasförmige Abstrom ausgewählt ist aus Erdgas, Synthesegasen, Raffineriegasen, Säuregasen, die aus einer Amineinheit erhalten werden, Gasen, die aus einer Einheit zur Tailgasreduktion beim Claus-Prozess erhalten werden, Biomassefermentationsgasen.

## Claims

1. A nitrogen-containing compound belonging to the polyamine family, obtained from the reaction between a polyol diglycidylether and piperazine, and having the following general formula (I): 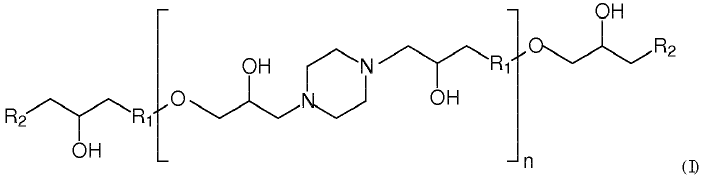 in which:
- n is a whole number in the range 0 to 30,
- the radical R₁ is selected from the groups with the following sub-formulae (g₁) to (g₄):
• the group with formula (g₁): 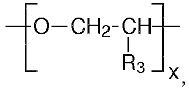 in which:
-- x is a whole number in the range 1 to 100, preferably in the range 1 to 25,
-- the radical R₃ is equally either a hydrogen atom, an alkyl radical or a hydroxyalkyl radical, containing between 1 and 4 carbon atoms,
• the group with formula (g₂): 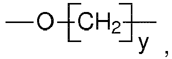 in which y is a whole number in the range 3 to 8,
• the group with formula (g₃): 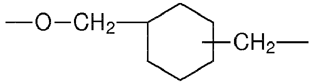
• the group with formula (g₄): 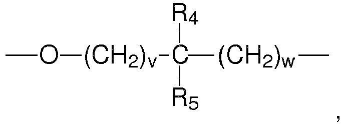 in which:
-- v and w are whole numbers, each in the range 1 to 4, with the condition that the sum of v and w is equal to 2, 3, 4 or 5,
-- the radical R₄ is equally either a hydroxyl group, an alkyl radical or a hydroxyalkyl radical, containing between 1 and 4 carbon atoms, and
-- the radical R₅ is equally either a hydrogen atom or a hydroxymethyl group (-CH₂OH).
- the radical R₂ has the following formula (g₅): 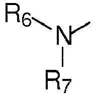 in which:
-- the radical R₆ is equally either a hydrogen atom, an alkyl radical or a hydroxyalkyl radical, containing between 1 and 6 carbon atoms,
-- the radical R₇ is equally either an alkyl radical or a hydroxyalkyl radical, containing between 1 and 6 carbon atoms,
-- the radicals R₆ and R₇ may be connected together via a covalent bond or via a heteroatom in order to form a heterocycle having 5, 6, 7 or 8 atoms when the radical R₆ is not a hydrogen atom,
and in which, when n is equal to 0, the radicals R₆ and R₇ are connected together to form a piperazine cycle, the radical R₂ having the formula (g₆) below: 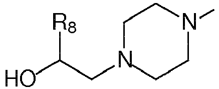
in which the radical R₈ is equally either a hydrogen atom, an alkyl radical or hydroxyalkyl radical, containing between 1 and 4 carbon atoms.

2. The compound as claimed in claim 1, in which the radicals R₆ and R₇ are connected together via a covalent bond or via a heteroatom in order to form a heterocycle having 5, 6, 7 or 8 atoms when the radical R₆ is not a hydrogen atom.

3. The compound as claimed in claim 2, in which the heterocycle is a piperazine cycle.

4. The compound as claimed in claim 3, in which the radical R₂ has the formula (g₆).

5. A process for the synthesis of a nitrogen-containing compound as claimed in one of claims 1 to 4, comprising the following reactions:
- a first reaction for addition or polyaddition of a polyol diglycidylether having formula (IV) with piperazine having formula (V) in order to form an intermediate compound having formula (VI), 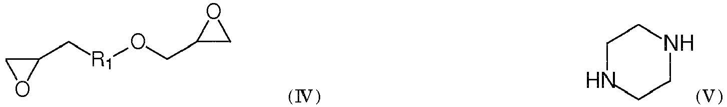 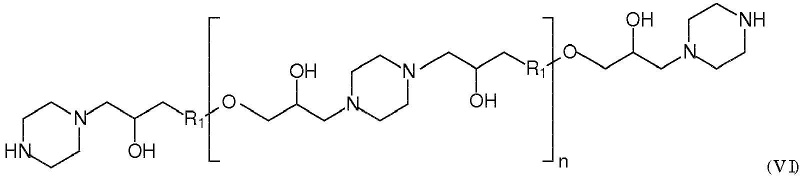 R₁ being as defined in the general formula (I),
said piperazine being in molar excess with respect to said polyol diglycidylether,
- a second reaction for addition of said intermediate compound having formula (VI) with monoepoxide having general formula (VII) 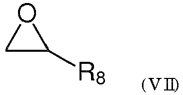 in order to produce at least one nitrogen-containing compound as claimed in one of claims 1 to 4.

6. A process for the synthesis of a nitrogen-containing compound as claimed in one of claims 1 to 4, comprising the following reactions:
- a first reaction for addition or polyaddition of a polyol diglycidylether having formula (IV) with piperazine having formula (V) in order to form an intermediate compound having formula (VI), 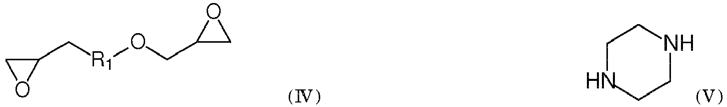 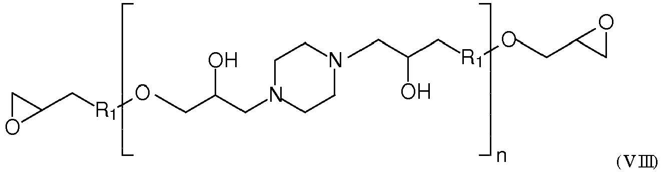 R₁ being as defined in the general formula (I),
said polyol diglycidylether being in molar excess with respect to said piperazine,
- a second reaction for addition of said intermediate compound having formula (VIII) with an amine having general formula (IX) 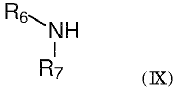 the radicals R₆ and R₇ being as defined in the general formula (I),
in order to produce at least one nitrogen-containing compound as claimed in one of claims 1 to 4.

7. The synthesis process as claimed in either claim 5 or claim 6, in which the first reaction and the second reaction are carried out in two successive steps.

8. The synthesis process as claimed in either claim 5 or claim 6, in which the first reaction and the second reaction are carried out in a single step.

9. The synthesis process as claimed in one of claims 5 to 8, in which the polyol diglycidylether having formula (IV) for the first reaction is selected from the list constituted by:
- ethylene glycol diglycidylether;
- diethylene glycol diglycidylether;
- triethylene glycol diglycidylether;
- polyethylene glycol diglycidylether with a molar mass in the range 200 to 2000 g/mole;
- the diglycidylether of copolymers of ethylene glycol and propylene glycol with a molar mass in the range 200 to 2000 g/mole;
- 1,3-propanediol diglycidylether;
- 1,4-butanediol diglycidylether;
- 1,5-pentanediol diglycidylether;
- 1,6-hexanediol diglycidylether;
- 1,8-octanediol diglycidylether;
- neopentylglycol diglycidylether;
- 1,4-cyclohexanedimethanol diglycidylether;
- 1,3-cyclohexanedimethanol diglycidylether;
- 1,2-cyclohexanedimethanol diglycidylether;
- glycerol diglycidylethers;
- trimethylolethane diglycidylethers;
- trimethylolpropane diglycidylethers;
- pentaerythritol diglycidylethers.

10. The synthesis process as claimed in one of claims 6 to 9, in which the secondary amine having formula (IX) is selected equally from the group constituted by:
- dimethylamine;
- diethylamine;
- 2-amino-2-methyl-1-propanol;
- tris(hydroxymethyl)aminomethane;
- morpholine;
- N-methylpiperazine;
- N-hydroxyethylpiperazine;
- N-2-hydroxypropylpiperazine;
- diethanolamine;
- N-methylaminoethanol.

11. The synthesis process as claimed in one of claims 5 or 7 to 9, in which the monoepoxide having formula (VII) is selected equally from the group constituted by:
- 1,2-epoxyethane;
- 1,2-epoxypropane;
- 1,2-epoxybutane;
- glycidol.

12. A selective process for the elimination of H₂S compared with CO₂ from a gaseous effluent comprising H₂S and CO₂, in which a step for absorption of the acid compounds is carried out by bringing the gaseous effluent into contact with an absorbing solution comprising:
(a) water,
(b) at least one principal nitrogen-containing compound comprising at least one tertiary amine function or secondary amine function comprising two secondary carbons in the α and α' position of the nitrogen atom or at least one tertiary carbon in the alpha or beta position of the nitrogen atom, and
(c) at least one auxiliary nitrogen-containing compound as claimed in one of claims 1 to 4, or susceptible of being obtained by a synthesis process as claimed in one of claims 5 to 11.

13. The process as claimed in claim 12, in which the absorbing solution comprises:
- a fraction by weight of water in the range 3.5% to 94.5% by weight of the absorbing solution, preferably in the range 39.5% to 79.5% by weight,
- a fraction by weight of the principal nitrogen-containing compound in the range 5% to 95% by weight of the absorbing solution, preferably in the range 20% to 60% by weight,
- a fraction by weight of the auxiliary nitrogen-containing compound in the range 0.5% to 25% by weight of the absorbing solution, preferably in the range 1% to 10% by weight,
the fraction by weight of the principal nitrogen-containing compound being higher than that of the auxiliary nitrogen-containing compound.

14. The process as claimed in claim 12 or claim 13, in which the principal nitrogen-containing compound is selected from the group constituted by:
- N-methyldiethanolamine;
- triethanolamine;
- diethylmonoethanolamine;
- dimethylmonoethanolamine;
- ethyldiethanolamine;
- tertiary monoalkanolamines of the family of 3-alkoxypropylamines from the list constituted by N-methyl-N-(3-methoxypropyl)-2-aminoethanol, N-methyl-N-(3-methoxypropyl)-1-amino-2-propanol, N-methyl-N-(3-methoxypropyl)-1-amino-2-butanol, N-ethyl-N-(3-methoxypropyl)-2-aminoethanol, N-ethyl-N-(3-methoxypropyl)-1-amino-2-propanol, N-ethyl-N-(3-methoxypropyl)-1-amino-2-butanol, N-isopropyl-N-(3-methoxypropyl)-2-aminoethanol, N-isopropyl-N-(3-methoxypropyl)-1-amino-2-propanol, and N-isopropyl-N-(3-methoxypropyl)-1-amino-2-butanol;
- diamines from the list constituted by 1,2-bis(2-dimethylaminoethoxy)ethane, 1,2-bis(2-diethylaminoethoxy)ethane and 1,2-bis(2-pyrolidinoethoxy)ethane;
- diamines of the 1,3-diamino-2-propanol family from the list constituted by 1,3-bis(dimethylamino)-2-propanol, (1-dimethylamino-3-tert-butylamino)-2-propanol, 1,3-bis(tert-butylamino)-2-propanol, 1,3-bis(diethylamino)-2-propanol, 1,3-bis(methylamino)-2-propanol, 1,3-bis(ethylmethylamino)-2-propanol, 1,3-bis(n-propylamino)-2-propanol, 1,3-bis(isopropylamino)-2-propanol, 1,3-bis(n-butylamino)-2-propanol, 1,3-bis(isobutylamino)-2-propanol, 1,3-bis(piperidino)-2-propanol, 1,3-bis(pyrrolidino)-2-propanol and N,N,N'-trimethyl-N'-hydroxyethyl-1,3-diamino-2-propanol;
- dihydroxyalkylamines from the list constituted by N-(2'-hydroxyethyl)-2-amino-2-methyl-1-propanol, N-(2'-hydroxypropyl)-2-amino-2-methyl-1-propanol, N-(2'-hydroxybutyl)-2-amino-2-methyl-1-propanol, (N-methyl-N-hydroxyethyl)-3-amino-2-butanol;
- diamines of the family of bis(amino-3-propyl)ethers or (amino-2-ethyl)-(amino-3-propyl)ethers from the list constituted by bis(dimethylamino-3-propyl)ether, bis(diethylamino-3-propyl) ether, (dimethylamino-2-ethyl)-(dimethylamino-3-propyl) ether, (diethylamino-2-ethyl)-(dimethylamino-3-propyl) ether, (dimethylamino-2-ethyl)-(diethylamino-3-propyl) ether, (diethylamino-2-ethyl)-(diethylamino-3-propyl) ether;
- beta-hydroxylated tertiary diamines from the list constituted by 1-dimethylamino-3-(2-dimethylaminoethoxy)-2-propanol, 1,1'-oxybis[3-(dimethylamino)-2-propanol], N,N,N',N'-(tetramethyl)-1,6-diamino-2,5-hexanediol, N,N,N',N'-(tetramethyL)-1,7-diamino-2,6-heptanediol, N,N,N',N'-(tetramethyl)-1,8-diamino-2,7-octanediol, N,N,N',N'-(tetramethyl)-1,9-diamino-2,8-nonanediol, N,N,N',N'-(tetramethyl)-1,10-diamino-2,9-decanediol;
- di-(2-hydroxyalkyl) monoamines from the list constituted by 1-[(2-hydroxyethyl)methylamino]-2-methyl-2-propanol, 1,1'-(methylimino)-bis-[2-methyl-2-propanol], 2-[(2-hydroxy-2-methylpropyl)amino]-2-methyl-1-propanol, 2-[(2-hydroxy-2-methylpropyl)amino]-1-butanol, bis(2-hydroxy-2-methylpropyl)amine;
- hindered tertiary 4-(aminoethyl)-morpholines from the list constituted by 1-(4-morpholino)-2-(methylisopropylamino) ethane, 1-(4-morpholino)-2-(methyltert-butylamino) ethane, 1-(4-morpholino)-2-(diisopropylamino) ethane, 1-(4-morpholino)-2-(1-piperidinyl) ethane;
- diamines from the list constituted by (N-morpholinoethyl) isopropylamine, (N-piperidinoethyl) isopropylamine, (N-morpholinoethyl) tert-butylamine;
- amines from the family of N-alkyl-3-hydroxypiperidines and N-alkyl-4-hydroxypiperidines from the list constituted by N-methyl-4-hydroxypiperidine, N-ethyl-3-hydroxypiperidine, N-methyl-3-hydroxypiperidine;
- alkylaminopiperazines, namely 1-methyl-4-(3-dimethylaminopropyl) piperazine, 1-ethyl-4-(diethylaminoethyl)piperazine.

15. The process as claimed in one of claims 12 to 14, in which the absorbing solution further comprises a physical solvent selected from the group constituted by methanol, ethanol, 2-ethoxyethanol, benzyl alcohol, triethylene glycol dimethylether, tetraethylene glycol dimethylether, pentaethylene glycol dimethylether, hexaethylene glycol dimethylether, heptaethylene glycol dimethylether, octaethylene glycol dimethylether, diethylene glycol butoxyacetate, glycerol triacetate, sulpholane, N-methylpyrrolidone, N-methylmorpholin-3-one, N,N-dimethylformamide, N-formyl-morpholine, N,N-dimethyl-imidazolidin-2-one, N-methylimidazole, ethylene glycol, diethylene glycol, triethylene glycol, thiodiglycol, tributylphosphate, and propylene carbonate.

16. The process as claimed in one of claims 12 to 15, in which the gaseous effluent is selected from natural gas, synthesis gases, refinery gases, acid gases obtained from an amines unit, gases obtained from a Claus process tail reduction unit, biomass fermentation gases.
